# EUROPEAN PATENT APPLICATION

(11) **EP 4 842 074 A1**
(43) Date of publication of application: **18.11.2026**
(21) Application number: 24916088.8
(22) Date of filing: 12.01.2024
(51) Int. Cl.: H04W 52/00, H04W 52/34

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LI, Dexin, Dongguan, Guangdong 523860 (CN); SHI, Zhihua, Dongguan, Guangdong 523860 (CN); XIAO, Han, Dongguan, Guangdong 523860 (CN)
(74) Representative: RGTH
(86) International application number: PCT/CN2024/072062
(87) International publication number: WO 2025/148021

(57) **Abstract**

Provided are a wireless communication method and a communication device. The method comprises: a first device sending first information to a second device, wherein the first information is associated with the power of transmitting a signal on a transmission resource, and the signal transmitted on the transmission resource comprises a plurality of non-orthogonally superimposed signals. In the embodiments of the present application, a sending end (also referred to as a first device) can send first information to a receiving end (also referred to as a second device), wherein the first information is associated with the power of transmitting a signal on a transmission resource; and compared with traditional solutions whereby a receiving end cannot acquire the power of transmitting a signal on a transmission resource, said solution helps to improve the possibility of successfully receiving a plurality of signals.

## Description

### TECHNICAL FIELD

This application relates to the field of communications technologies, and more specifically, to a wireless communication method and a communications device.

### BACKGROUND

To improve utilization of transmission resources, a transmitting end may transmit a plurality of signals on a same transmission resource in a non-orthogonal superposition manner. However, in such a scheme where the plurality of signals are transmitted in the non-orthogonal superposition manner, difficulty for a receiving end to correctly receive the signals may increase. Especially when a power allocation method used for transmitting the plurality of signals in the non-orthogonal superposition manner is relatively flexible, it may further increase reception difficulty of the plurality of signals, reducing a probability of successfully receiving the plurality of signals.

### SUMMARY

This application provides a wireless communication method and a communications device. The following describes the aspects related to this application.

According to a first aspect, a wireless communication method is provided, and includes: transmitting, by a first device, first information to a second device, where the first information is associated with power for transmitting a signal on a transmission resource, and the signal transmitted on the transmission resource includes a plurality of non-orthogonally superimposed signals.

According to a second aspect, a wireless communication method is provided, and includes: receiving, by a second device, first information transmitted by a first device, where the first information is associated with power for transmitting a signal on a transmission resource, and the signal transmitted on the transmission resource includes a plurality of non-orthogonally superimposed signals.

According to a third aspect, a communications device is provided. The communications device is a first device, and includes: a transmitting unit, configured to transmit first information to a second device, where the first information is associated with power for transmitting a signal on a transmission resource, and the signal transmitted on the transmission resource includes a plurality of non-orthogonally superimposed signals.

According to a fourth aspect, a communications device is provided. The communications device is a second device, and includes: a receiving unit, configured to receive first information transmitted by a first device, where the first information is associated with power for transmitting a signal on a transmission resource, and the signal transmitted on the transmission resource includes a plurality of non-orthogonally superimposed signals.

According to a fifth aspect, a communications device is provided, and includes a processor, a memory, and a communications interface. The memory is configured to store one or more computer programs, and the processor is configured to invoke the computer program in the memory, to cause the communications device to execute part or all of the steps in the methods according to the foregoing aspects.

According to a sixth aspect, an embodiment of this application provides a communications system, and the system includes the first device and/or the second device described above. In another possible design, the system may further include another device that interacts with the terminal device or the network device in the solutions provided in embodiments of this application.

According to a seventh aspect, an embodiment of this application provides a computer-readable storage medium. The computer-readable storage medium stores a computer program, and the computer program causes a communications device (for example, a first device or a second device) to execute part or all of the steps in the methods according to the foregoing aspects.

According to an eighth aspect, an embodiment of this application provides a computer program product. The computer program product includes a non-transitory computer-readable storage medium that stores a computer program, and the computer program is operable to cause a communications device (for example, a first device or a second device) to execute part or all of the steps in the methods according to the foregoing aspects. In some implementations, the computer program product may be a software installation package.

According to a ninth aspect, an embodiment of this application provides a chip, where the chip includes a memory and a processor, and the processor may invoke a computer program from the memory and run the computer program, to implement part or all of steps described in a method according to each of the foregoing aspects.

In embodiments of this application, a transmitting end (also referred to as a first device) may transmit first information to a receiving end (also referred to as a second device), where the first information is associated with power for transmitting a signal on the transmission resource described above. Compared with a conventional scheme where a receiving end fails to obtain power for transmitting a signal on a transmission resource, this is conducive to improving a probability of successfully receiving a plurality of signals.

### BRIEF DESCRIPTION OF DRAWINGS

FIG. 1 shows a wireless communications system 100 to which embodiments of this application are applied.
FIG. 2 is a schematic diagram of a neural network to which embodiments of this application are applicable.
FIG. 3 is a flowchart of signal transmission in a wireless communications system to which embodiments of this application are applicable.
FIG. 4 is a schematic diagram of channel estimation and signal recovery to which embodiments of this application are applicable.
FIG. 5(a) to FIG. 5(c) are schematic diagrams of pilot patterns under different configurations.
FIG. 6 is a schematic diagram of a process of performing channel estimation based on a channel estimation module.
FIG. 7 is a diagram showing a comparison between an orthogonal transmission manner and a non-orthogonal transmission manner.
FIG. 8 is a diagram showing a comparison between an orthogonal transmission manner and another non-orthogonal transmission manner.
FIG. 9 is a schematic diagram of non-orthogonal superposition of data signals and pilots in a linear superposition manner.
FIG. 10 is a schematic diagram of transmission of pilots and data signals of different users or different layers in a non-orthogonal superposition manner.
FIG. 11 is a schematic diagram of transmission of pilots in a non-orthogonal superposition manner in a multi-stream multi-user scenario.
FIG. 12A is a schematic diagram of frequency-domain orthogonality.
FIG. 12B is a schematic diagram of time-domain orthogonality.
FIG. 12C is a schematic diagram of time-frequency-domain orthogonality.
FIG. 13 is a schematic diagram of an implementation in which code-domain orthogonality of pilot signals across two layers is satisfied.
FIG. 14 and FIG. 15 are schematic diagrams of an integrated AI receiver.
FIG. 16 and FIG. 17 are schematic diagrams of another integrated AI receiver.
FIG. 18 is a schematic diagram of processing logic of an integrated AI receiver.
FIG. 19 is a schematic diagram of a wireless communication method according to an embodiment of this application.
FIG. 20A and FIG. 20B each show a manner of determining locations of a first type of transmission resources according to an embodiment of this application.
FIG. 21 is a schematic diagram of a communication method based on first information according to an embodiment of this application.
FIG. 22, FIG. 23A, and FIG. 23B are schematic diagrams of a transmission process of first information in a scenario of using a generalized receiver according to an embodiment of this application.
FIG. 24 is a schematic diagram of a communications device according to an embodiment of this application.
FIG. 25 is a schematic diagram of a communications device according to another embodiment of this application.
FIG. 26 is a schematic diagram of a structure of a communications apparatus according to an embodiment of this application.

### DESCRIPTION OF EMBODIMENTS

Technical solutions in this application are described below with reference to the accompanying drawings.

### Communications system

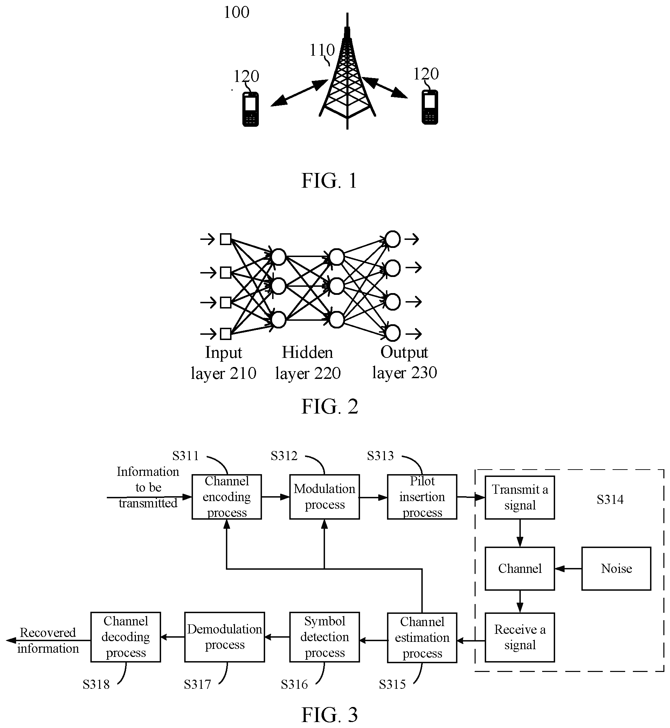

FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage area.

FIG. 1 exemplarily shows one network device and two terminals. Optionally, the wireless communications system 100 may include a plurality of network devices, and another quantity of terminal devices may be included within coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover devices having the following various names, or may be replaced with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), or machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move according to a location of the mobile base station. In another example, a helicopter or an unmanned aerial vehicle may be configured to serve as a device in communication with another base station.

In some deployments, the network device in embodiments of this application may be a CU or a DU, or the network device may include a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

With the development of artificial intelligence (artificial intelligence, AI) technologies, AI models have been introduced into an increasing quantity of communication processes. For ease of understanding, the following first describes, with reference to FIG. 2, an AI model to which embodiments of this application are applicable.

### Artificial intelligence (artificial intelligence, AI) model

In recent years, artificial intelligence research represented by a neural network has made great achievements in many fields, and will also play an important role in people's production and life for a long time to come. A neural network may be understood as an operation model including a plurality of neuron nodes that are connected, where a connection between nodes may represent a weighting value from an input signal to an output signal, which is generally referred to as a weight. Each node performs weighted summation on different input signals and outputs the signals by using a specific activation function.

Common neural networks include a CNN, a recurrent neural network (recurrent neural network, RNN), a deep neural network (deep neural network, DNN), and the like.

With reference to FIG. 2, the following describes a neural network to which embodiments of this application are applicable. Layers of the neural network shown in FIG. 2 may be classified into three types according to locations of different layers: an input layer 210, a hidden layer 220, and an output layer 230. Generally, the first layer is the input layer 210, the last layer is the output layer 230, and the middle layers between the first layer and the last layer are the hidden layers 220.

The input layer 210 is configured to input data. The input data may be, for example, a received signal received by a receiver. The hidden layer 220 is configured to process the input data, for example, perform decompression processing on a received signal. The output layer 230 is configured to output processed output data, for example, output a decompressed signal.

As shown in FIG. 2, the neural network includes a plurality of layers, and each layer includes a plurality of neurons. Neurons between the layers may be fully connected, or may be partially connected. For connected neurons, an output of neurons of an upper layer may be used as an input of neurons of a lower layer.

With continuous development of neural network research, neural network deep learning algorithms are proposed in recent years. A relatively large quantity of hidden layers are introduced into a neural network to form a DNN. More hidden layers enable the DNN to better describe a complex situation in a real world. In theory, a model with a larger quantity of parameters has higher complexity and a larger "capacity", which means that the model can complete more complex learning tasks. This neural network model is widely used in pattern recognition, signal processing, optimization combination, anomaly detection, and the like.

The AI model to which embodiments of this application are applicable is described above with reference to FIG. 2. A communication process to which embodiments of this application are applicable is described below with reference to FIG. 3.

### Signal transmission process in a wireless communications system

FIG. 3 is a flowchart of signal transmission in a wireless communications system to which embodiments of this application are applicable. As shown in FIG. 3, the signal transmission process in the wireless communications system may be roughly divided into a plurality of signal processing processes S311 to S318 shown in FIG. 3. Part or all of the signal processing processes shown in FIG. 3 may be implemented by a separate AI model.

In the channel encoding process S311, a transmitter performs channel encoding on information to be transmitted, to obtain an encoded bitstream. The information to be transmitted may be in the form of a bit stream.

In the modulation process S312, the bitstream is modulated into modulation symbols.

In the pilot insertion process S313, pilot symbols are inserted into the modulation symbols to form a signal to be transmitted, where the pilot symbols may be used by a receiver to perform channel estimation and symbol detection.

In the signal transmission process S314, the signal is carried on a channel and transmitted to the receiver. During transmission of the signal by using the channel, noise is usually superimposed.

In the channel estimation process S315, the receiver may perform channel estimation based on a reference signal, to obtain channel state information (channel state information-reference signal, CSI) and feed back the CSI to a transmitter through a feedback link, for the transmitter to adjust channel encoding, modulation, pre-encoding, and other schemes.

In the symbol detection process S316, symbol detection is performed on the received modulation symbols to obtain a detection result.

In the demodulation process S317, the received modulation symbols are demodulated based on the detection result to obtain a bitstream.

In the channel decoding process S318, the bitstream is decoded to obtain recovered information, where the recovered information may be in the form of a bit stream.

It should be understood that the signal processing processes S311 to S318 shown in FIG. 3 are exemplarily merely common signal processing processes in the wireless communications system. The wireless communications system may further include signal processing processes such as resource mapping, pre-encoding, interference cancellation, and CSI measurement. These signal processing processes may also be implemented by a separate artificial intelligence (artificial intelligence, AI) model. For brevity, details are not repeated in this application.

### Channel estimation

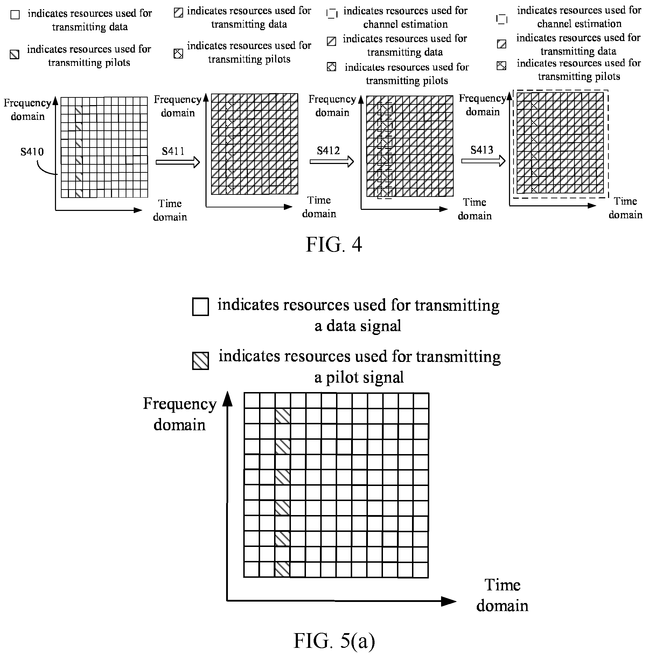

Due to complexity and a time-varying characteristic of a wireless channel environment, in a wireless communications system (for example, the wireless communications system described above), a receiver is required to recover a received signal based on a channel estimation result. FIG. 4 is a schematic diagram of channel estimation and signal recovery to which embodiments of this application are applicable.

As shown in FIG. 4, in step S410, in addition to transmitting a data signal on time-frequency resources, a transmitter also transmits a series of pilots (pilot) known to the receiver.

In step S411, the transmitter transmits the data signal and the pilots to the transmitter by using a channel. Time-frequency resources occupied by a reference signal are different from time-frequency resources occupied by the data signal.

In step S412, after receiving the pilots, the receiver may perform channel estimation. In a possible implementation, the receiver may estimate, based on pre-stored pilots and received pilots by using a channel estimation algorithm (for example, least squares (least squares method, LS) channel estimation), channel information of the channel used to transmit the pilots.

In step S413, the receiver may recover, based on the channel information of the channel used to transmit the pilot sequence, channel information on full time-frequency resources by using an interpolation algorithm, and the recovered channel information may be used for subsequent CSI feedback, data recovery, or the like.

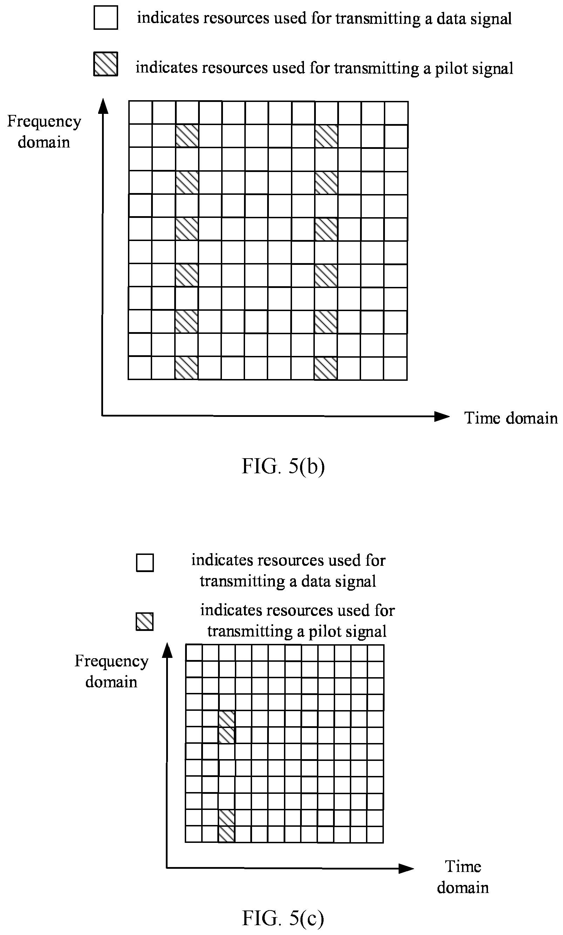

Based on the description provided above with reference to FIG. 4, it may be learned that time-frequency resources for transmitting the pilots are different from time-frequency resources for transmitting the data signal. In addition, in some communication protocols (for example, an NR communication protocol), it is specified that symbols used for transmitting pilots (hereinafter referred to as "pilot symbols") are different from symbols (hereinafter also referred to as "data symbols") used for transmitting data signals. FIG. 5 shows patterns of data symbols and pilot symbols under different configurations.

Referring to FIG. 5(a), within a resource block (resource block, RB), a plurality of REs corresponding to a symbol 2 occupied by pilot symbols within the RB are distributed at an interval of one subcarrier. Referring to FIG. 5(b), within an RB, pilot symbols occupy part of symbols among a plurality of symbols corresponding to a symbol 2 and a symbol 8 within the RB. Referring to FIG. 5(c), within an RB, pilot symbols occupy a plurality of groups of REs in a symbol 2 within the RB, where each group of REs includes two transmission resource elements (resource element, RE) consecutive in frequency domain.

Generally, in the patterns shown in FIG. 5(a) to FIG. 5(c), different patterns may be adapted to different communication environments. In some implementations, when a terminal device moves at a relatively high speed and channel characteristics change rapidly over time, a pattern with a relatively dense distribution of pilot symbols may be selected, which is conducive to improving accuracy of channel quality estimation for the entire RB. For example, the pattern shown in FIG. 5(b) may be selected.

In some other implementations, when a terminal device moves at a relatively low speed and channel characteristics change slowly over time, a pattern with a relatively sparse distribution of pilot symbols may be selected, which is conducive to reducing overheads caused by transmitting reference signals while ensuring the accuracy of channel quality estimation for the entire RB.

In embodiments of this application, the pilot is not limited. In some scenarios, a pilot may also be referred to as a "reference signal (reference signal, RS)". From a perspective of a transmission direction of a reference signal, the reference signal may include an uplink reference signal and a downlink reference signal. From a perspective of a type of a reference signal, the reference signal may include a channel state information-reference signal (channel state information-reference signal, CSI-RS), a demodulation reference signal (demodulation reference signal, DMRS), a phase-tracking reference signal (phase-tracking reference signals, PT-RS), a sounding reference signal (sounding reference signal, SRS), and a cell-specific reference signal (cell-specific reference signals, CRS).

### Channel estimation based on an AI decoder

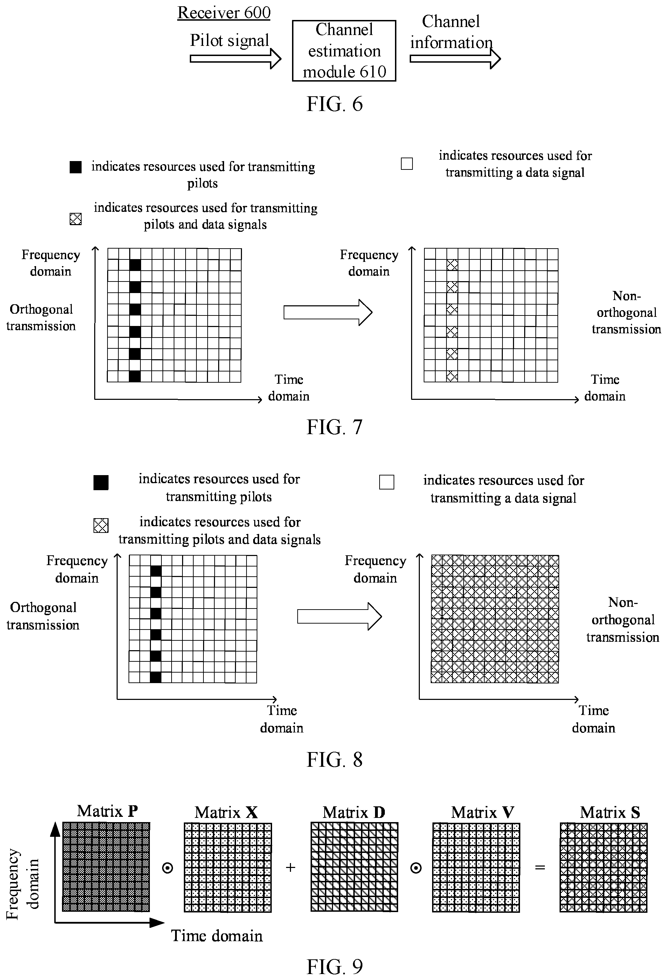

Channel estimation based on an AI decoder aims to process, by using an AI-based channel estimation module, a reference signal received by a receiver, to achieve channel estimation. FIG. 6 shows a process of performing channel estimation based on a channel estimation module. Referring to FIG. 6, a reference signal received by a receiver 600 is used as input to a channel estimation module 610. Accordingly, the channel estimation module 610 processes the input reference signal to output channel information. In addition, in some implementations, other assistance information may be added in addition to the reference signal, to improve accuracy of channel information output by the channel estimation module. For example, an original sequence of the reference signal pre-stored by the receiver 600, an energy level of the reference signal received by the receiver 600, a transmission delay for transmission of the reference signal, or noise during transmission of the reference signal may also be input into the channel estimation module 610.

### Basic principles of non-orthogonally superimposed pilot design

As described above, data signals and pilots are transmitted in an orthogonal manner by using a transmission resource, that is, the data signals and the pilot signals are required to occupy different transmission resources. Therefore, to improve utilization of transmission resources, it is proposed that data signals and pilots may be transmitted in a non-orthogonal superposition manner by using a same transmission resource, where the transmission resource may include one or more of the following: time-domain resources, frequency-domain resources, or code-domain resources.

FIG. 7 is a diagram showing a comparison between an orthogonal transmission manner and a non-orthogonal transmission manner. Referring to FIG. 7, assuming that pilots and data signals are transmitted on an RB in an orthogonal transmission manner, where the pilots and the data signals occupy different REs. Accordingly, after the pilots and the data signals are transmitted in a non-orthogonal transmission manner (also known as a non-orthogonal superposition manner), the pilots and the data signals may be superimposed and placed in a same RE, where this RE may be referred to as a superimposed RE or a superimposed symbol. Referring to FIG. 7, if pilots and data signals are transmitted in a non-orthogonal manner, REs for transmitting the pilots may be used for transmitting the data signals. In this case, resource overheads of the pilots may be considered as 0, thereby greatly increasing a quantity of transmission resources available for transmitting data.

In the scheme described above based on FIG. 7, REs for transmitting pilots may still be determined based on a pilot pattern. In other words, there are still REs in the RB that carries only data, to reduce changes to a conventional pilot transmission method. In some scenarios, the concept of pilot pattern may also be completely abandoned. This is described below with reference to FIG. 8.

FIG. 8 is a diagram showing a comparison between an orthogonal transmission manner and another non-orthogonal transmission manner. Referring to FIG. 8, pilots and data may be placed on each RE in an RB in a non-orthogonal superposition manner. Therefore, there is no need to additionally indicate REs carrying the pilots in the RB by using a pilot pattern. In this way, there is no need to transmit a pilot pattern between communications devices involved in pilot transmission, thereby reducing overheads caused by indication of a pilot pattern.

In some scenarios, non-orthogonal superposition of data signals and pilots may be achieved based on linear superposition. Referring to FIG. 9, it is assumed that an RB has a dimension of N × M, and a data matrix **D** and a pilot matrix **P** have the same dimension as the RB, where Data matrix **D** ∈ **C**N × M, **C** denotes a set of modulation constellation points for data symbols, Pilot matrix **P** ∈ **P**N × M, and **P** denotes a set of modulation constellation points for pilot symbols.

Referring to FIG. 9, when a modulation scheme is 4QAM, C = {0.707+0.707j, 0.707-0.707j, -0.707+0.707j, -0.707-0.707j}. When the modulation scheme is BPSK, P = {-1,1}. Accordingly, the linear superposition above may be represented by a formula **S** = **V**⊙**D** + **X**⊙**P**, Superposition symbol **S** ∈ **C**N × M, Superposition weight matrix **V** = sqrt(**A**) ∈ [0,1]N × M, and superposition weight matrix **X** = sqrt(1-**A**) ∈ [0,1]N × M, where **A** ∈ [0,1]N × M, sqrt(·) denotes a square root operation, and ⊙ denotes an Hadamard (hadamard) product.

In some implementations, each element in the superposition weight matrix **V** may range from 0 to 1, and the superposition weight matrix **V** is learnable, that is, during AI training, parameters of the superposition weight matrix **V** may be optimized based on training data. When a size of a resource block allocated by the system changes, the weight matrix also changes accordingly with the same dimension.

### Superimposed pilot design in multi-stream multi-user scenarios

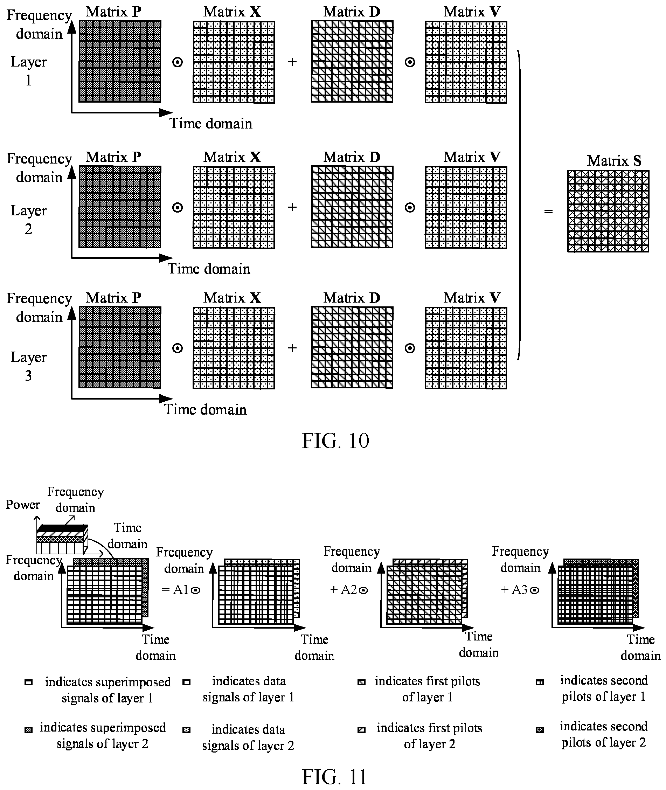

Referring to FIG. 10, transmission of pilots and data signals of different users or different layers in a non-orthogonal superposition manner may cause a problem of severe inter-stream interference. Therefore, to reduce a problem of inter-stream interference, pilots and data signals may be transmitted in a non-orthogonal superposition manner for each user or layer, and pilots of different users or different layers may be transmitted orthogonally in frequency domain, time domain, or code domain. Certainly, a problem of inter-stream interference may also be reduced by setting pilots of different users or different layers to have low correlation.

FIG. 11 is a schematic diagram of transmission of pilots in a non-orthogonal superposition manner in a multi-stream multi-user scenario. It is assumed that the transmission resource is one RB and corresponds to two transmission layers. It should be understood that the same principle may be further extended to cases with a plurality of PRBs, L > 2, and N2 > 1. From a perspective of the first layer, multi-layer superposition is as shown in FIG. 11, where A1, A2, and A3 are respectively power proportion allocation matrices for data signals of the first layer, reference signals of the first layer, and reference signals of the second layer, and ⊙ denotes an Hadamard product.

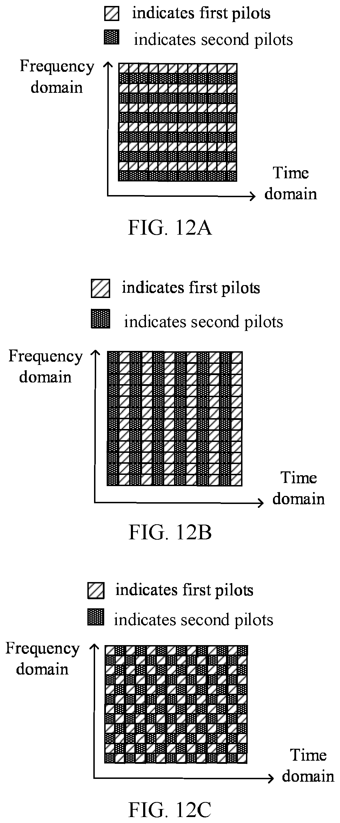

In some implementations, during transmission of each layer or each user, pilots in different layers may be orthogonal in frequency domain, time domain, or time-frequency domain. For example, different reference signals are placed with different subcarrier spacings in frequency domain, different OFDM symbol spacings in time domain, or RE spacings in time-frequency domain. Referring to FIG. 12A, frequency-domain orthogonality may be understood as placing different pilots on different frequency-domain resources (for example, subcarriers). Referring to FIG. 12B, time-domain orthogonality may be understood as placing different pilots on different time-domain resources (for example, symbols). Referring to FIG. 12C, time-frequency domain orthogonality may be understood as placing different pilots on different time-domain resources (for example, symbols) and placing different pilots on different frequency-domain resources (for example, subcarriers).

In some implementations, during transmission of each layer or each user, signals of a plurality of layers may also be orthogonal in code domain, that is, each RE carries pilots of different layers, but pilot sequences of different layers are mutually orthogonal. In other words, ||**P1**⊙**P2**||F = 0, where **P1** ∈ **C**N × M and **P2** ∈ **C**N × M respectively represent matrices of pilot of the two layers, **C** denotes a set of complex numbers, and ||·||F represents a Frobenius norm.

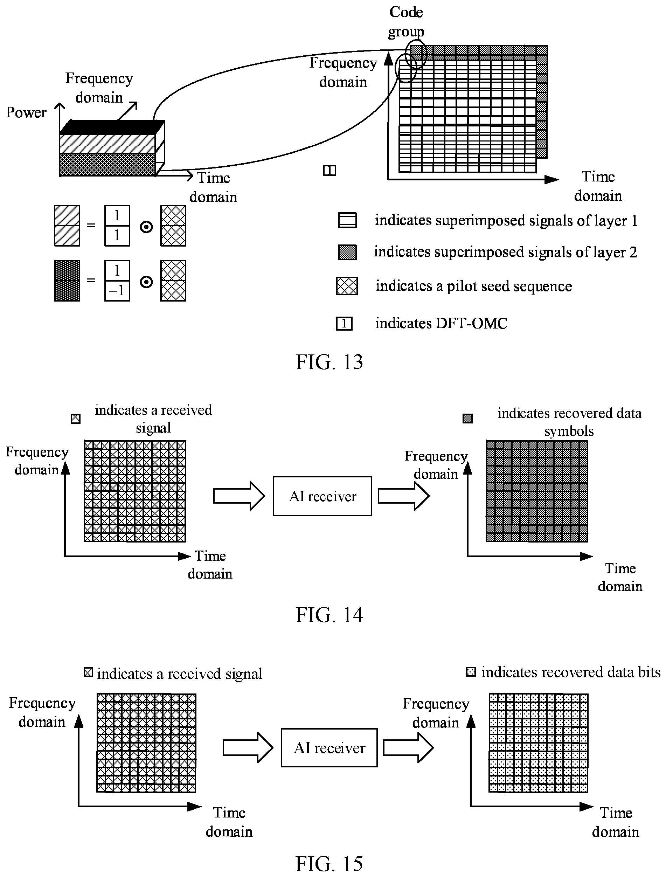

FIG. 13 shows an implementation in which code-domain orthogonality of pilots across two layers is satisfied. Referring to FIG. 13, in a same code domain (for example, a code group), pilots in different layers may be set to be different. Pilot seed sequences may be adjusted by using DFT-OMC to obtain different pilots.

### Model-based receiver

As described above, pilots and data signals may be transmitted in a non-orthogonal superimposition manner, which improves utilization of transmission resources but increases difficulty for a receiving end to distinguish between pilots and data signals. Due to superposition of data signals and pilots, conventional receiver algorithms are unable to effectively separate pilots from data signals. As a result, it may be impossible to complete accurate channel estimation, and even more impossible to demodulate the data signals.

Therefore, for the above problems, a model-based receiver is introduced, where the model may be an AI model or an ML model. Different from conventional demodulation algorithms, the model-based receiver may distinguish between data signals and pilots in superimposed symbols by using an AI model, and complete channel estimation and symbol detection. In other words, a main problem solved by the design of the receiver is: symbols obtained by superposition of pilots (also referred to as non-orthogonal pilots) and data are transmitted to a receiving end by using a channel. Accordingly, the receiving end obtains a received signal containing non-orthogonal pilots, and the receiver may perform channel estimation and symbol detection based on the received signal to achieve accurate recovery of data symbols.

Generally, as described in the communications system shown in FIG. 2, the receiver first performs channel estimation on received pilots and then performs data symbol detection based on a channel estimation result and received data signals. In some scenarios, an integrated AI receiver considers implementing channel estimation and data symbol detection by using one model. Input to this model includes: a received signal containing non-orthogonal pilots or a combination of a received signal containing non-orthogonal pilots and the pilots. Output of this model includes a recovered data bit stream or recovered data symbols.

FIG. 14 and FIG. 15 show an integrated AI receiver. Referring to FIG. 14, the 4 quadrature amplitude modulation (quadrature amplitude modulation, QAM), that is, data symbols on each RE corresponding to two bits of information, is used as an example, a received signal is input into the integrated AI receiver, and accordingly, output of the integrated AI receiver is recovered data symbols. Referring to FIG. 15, the 4QAM, that is, data symbols on each RE corresponding to two bits of information, is used as an example, a received signal is input into the integrated AI receiver, and accordingly, output of the integrated AI receiver is recovered data bits. Recovered data symbols in FIG. 14 are in a one-to-one correspondence with recovered data bits on a same RE in FIG. 15.

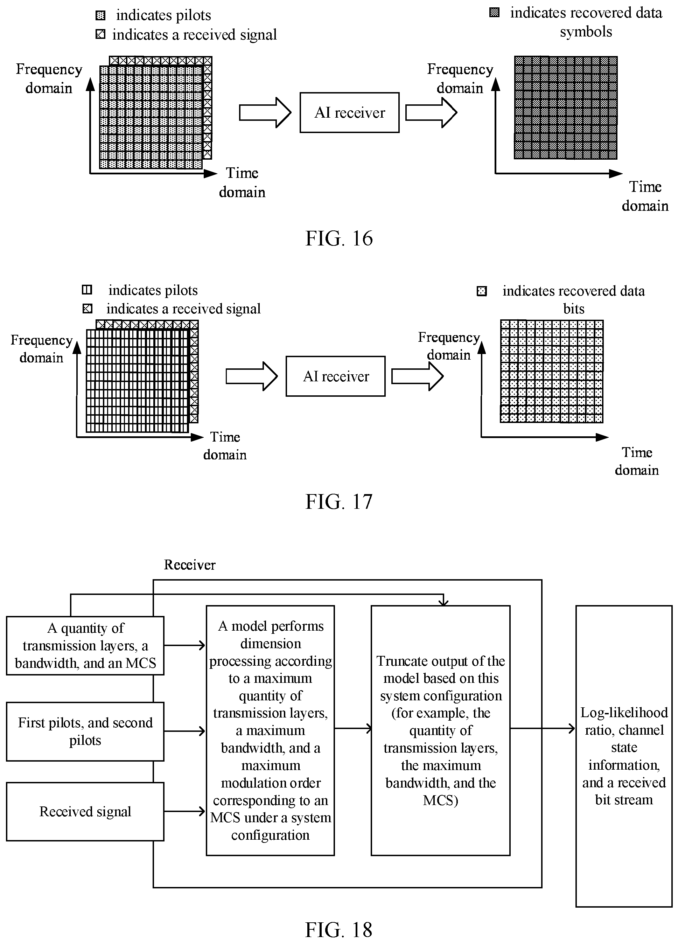

FIG. 16 and FIG. 17 show another integrated AI receiver. Referring to FIG. 16, the 4QAM, that is, data symbols on each RE corresponding to two bits of information, is used as an example, a received signal and a pilot signal are concatenated and input into the integrated AI receiver, and accordingly, output of the integrated AI receiver is recovered data symbols. Referring to FIG. 17, the 4QAM, that is, data symbols on each RE corresponding to two bits of information, is used as an example, a received signal and a pilot signal are concatenated and input into the integrated AI receiver, and accordingly, output of the integrated AI receiver is recovered data bits. Recovered data symbols in FIG. 16 are in a one-to-one correspondence with recovered data bits on a same RE in FIG. 17.

In embodiments of this application, the concatenation described above is not limited. In some implementations, the concatenation may be performed in one or more dimensions among time domain, frequency domain, or code domain.

In some scenarios, for a superimposed pilot design scheme in multi-stream multi-user scenarios, receivers may be classified into non-generalized receivers and generalized receivers. In the non-generalized receiver scheme, a dedicated receiver may be provided for each set of system configurations, where the system configurations may include parameters such as a quantity of layers, a bandwidth, and a modulation and coding scheme (modulation and coding scheme, MCS). Although the non-generalized receiver scheme has relatively low generalization and scalability, it is conducive to simplifying a training process of a model. Generally, if there are not many types of system configurations, this scheme is a relatively simple scheme.

In the generalized receiver scheme, one or more generalized receivers may be provided for different system configurations. In this way, one receiver may be adapted to a plurality of configuration parameters. Referring to FIG. 18, the model performs dimension processing according to a maximum quantity of transmission layers, a maximum bandwidth, and a maximum modulation order corresponding to an MCS under a system configuration, and truncates output of the model based on this system configuration (for example, the quantity of transmission layers, the maximum bandwidth, and the MCS) to obtain demodulated information that conforms to the system configuration. The output of the model is determined based on a function of the model. If the function of the model is for channel estimation, the output of the model may include estimated channel state information. If the function of the model is to perform channel estimation and symbol detection, the output of the model includes a log-likelihood ratio. If the function of the model includes channel estimation, symbol detection, and channel decoding, the output of the model includes a received bit stream.

As described above, to improve utilization of transmission resources, the transmitting end may transmit a plurality of signals on a same transmission resource in a non-orthogonal superimposition manner. However, in such a scheme where the plurality of signals are transmitted in the non-orthogonal superposition manner, difficulty for a receiving end to correctly receive the signals may increase. Especially when a power allocation method used for transmitting the plurality of signals in the non-orthogonal superposition manner is relatively flexible, it may further increase reception difficulty of the plurality of signals, reducing a probability of successfully receiving the plurality of signals.

Therefore, for the foregoing problems, an embodiment of this application provides a wireless communication method. In this method, a transmitting end may transmit first information to a receiving end, where the first information is associated with power for transmitting a signal on the transmission resource described above. Compared with a conventional scheme where a receiving end is unable to obtain power for transmitting a signal on a transmission resource, this is conducive to improving a probability of successfully receiving a plurality of signals.

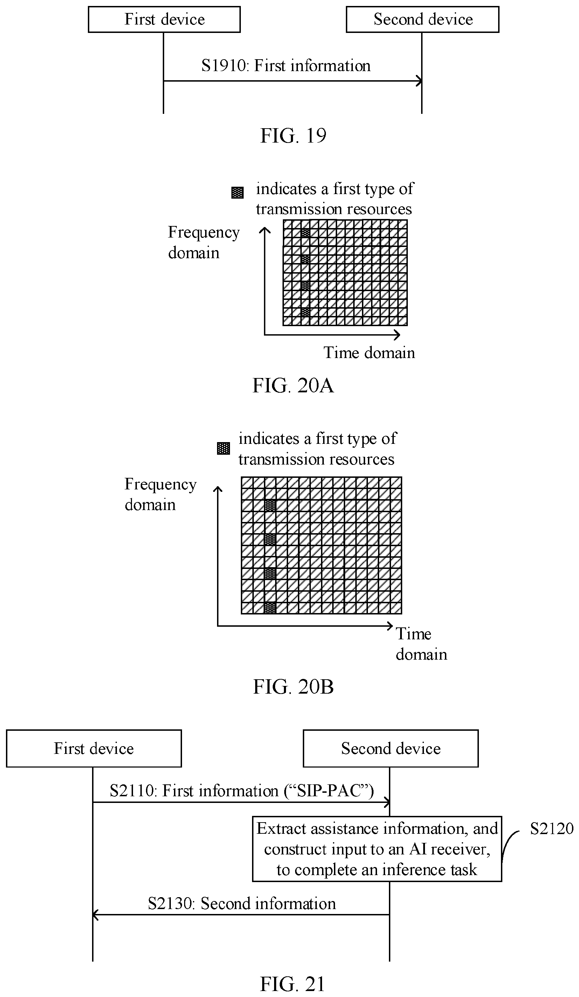

In some implementations, the transmitting end may serve as an example of a first device. Certainly, in embodiments of this application, the first device may alternatively be another device to which power of a plurality of signals is known. In some other implementations, the receiving end may serve as an example of a second device. The second device may alternatively be another device that is required to learn power of a plurality of signals. A schematic diagram of a wireless communication method according to an embodiment of this application is described below with reference to FIG. 19 from a perspective of communication between the first device and the second device.

In step S1910, the first device transmits first information to the second device, where the first information is associated with power for transmitting a signal on a transmission resource, and the signal transmitted on the transmission resource includes a plurality of non-orthogonally superimposed signals.

In embodiments of this application, non-orthogonal superposition may be replaced with another term, such as non-orthogonal transmission. Certainly, in embodiments of this application, non-orthogonal superposition may be understood as that a transmission resource for transmitting a specific signal among the plurality of signals is also used for transmitting other signals. Accordingly, the signal transmitted on the transmission resource described above including a plurality of non-orthogonally superimposed signals may be replaced with the transmission resource being used for transmitting the plurality of signals, or the transmission resource being used for transmitting a plurality of different types of signals.

In embodiments of this application, the plurality of signals are not limited. For example, the plurality of signals may include pilots and data signals. For details, reference may be made to the foregoing description. For another example, the plurality of signals may include pilots and control signals. For still another example, the plurality of signals may include a plurality of different data signals.

In embodiments of this application, the transmission resource is not limited. In some implementations, the transmission resource may be one or more of time-domain resources, frequency-domain resources, or code-domain resources. The time-domain resources may be, for example, symbols, slots, or other time-domain resources to be introduced into a future communications system. The frequency-domain resources may be, for example, subcarriers or other frequency-domain resources to be introduced into a future communications system. Assuming that the transmission resource includes time-domain resources and frequency-domain resources, the transmission resource may be an RE or an RB.

In some implementations, the first information being associated with the power (also referred to as transmit power) for transmitting the signal on the transmission resource may be understood as the first information being used to indicate power used for transmitting different signals among the plurality of signals on the transmission resource. In some scenarios, to prevent power for transmitting a signal on a transmission resource from interfering with other transmission resources, total power for transmitting signals on the transmission resource is usually specified. In this case, the first information may be understood as being used to indicate power allocation for different signals among the plurality of signals. In other words, the first information may be used to indicate allocation of total power among a plurality of signals.

As described above, the plurality of signals may include pilots. Correspondingly, the first information may be used to indicate power allocation for the pilots on the transmission resource. In this case, the first information may also be referred to as "power allocation indication configuration for superimposed pilots (power allocation configuration for superimposed pilots, SIP-PAC)".

In embodiments of this application, a manner in which the first information indicates power is not limited. In some implementations, assuming that the plurality of signals include only a first signal and a second signal. In this case, the first information may indicate power for transmitting the first signal. Correspondingly, the second device may determine power for the second signal based on total power corresponding to the transmission resource and the power for the first signal. For example, a sum of the power for the first signal and the power for the second signal may be equal to the total power. In this case, it may be understood that the first information directly indicates the power for transmitting the first signal and implicitly indicates the power for transmitting the second signal. In some other implementations, the first information may be used to indicate power for transmitting each signal among the plurality of signals. In this case, it may be understood that the first information directly indicates the power for transmitting the first signal and the power for transmitting the second signal.

In embodiments of this application, implementation of indicating power by using the first information is not limited. For example, the first information may indicate a specific power value. For another example, the first information may indicate a ratio of power for transmitting a specific signal among the plurality of signals to total power to indicate the above power. The ratio of the power for transmitting the specific signal among the plurality of signals to the total power may be understood as a proportion of the power for transmitting the specific signal in the total power.

In some scenarios, power of pilots is adjusted based on a weight matrix of the pilots. Correspondingly, in embodiments of this application, a weight matrix of pilots may be configured by using the first information described above through a power allocation indication configuration for superimposed pilots.

In embodiments of this application, a manner in which the first device triggers the first information is not limited. In some implementations, if the first device has not transmitted the first information before, the first device may trigger transmission of the first information to the second device. In some other implementations, if the power for transmitting the plurality of signals by the first device changes, or in other words, if content of the first information changes, the first device may trigger transmission of the first information to the second device.

In some scenarios, to increase a success rate of receiving the plurality of signals described above, the receiving end may receive the plurality of signals by using a model-based receiver (for example, the integrated AI receiver described above). Correspondingly, in some implementations, after receiving the first information, the second device may input the first information into a model for model training, which is conducive to improving prediction accuracy of the model, thereby increasing a success rate of receiving a plurality of signals by using the model-based receiver. In other words, the first information may be used for performing model training by the model-based receiver.

For example, based on the foregoing description, it may be learned that, under the design of superimposed pilots, superposition of data symbols and pilot symbols on each RE of each stream follows a power ratio. To mitigate interference between a plurality of streams, power allocation ratios for different REs of different streams may be designed more flexibly. In an extreme case, a pilot power weight on each RE of each stream may vary. In similar complex scenarios, if power allocation information is not directly provided as model input to the receiver, the receiver is required to learn, from a dataset, pilot power weight information for each RE of each stream. As complexity of power allocation increases, training difficulty of the receiver increases, and performance cannot be ensured. Therefore, in embodiments of this application, the first information may be used as input to the receiver to reduce complexity of training the receiver.

In some other implementations, after receiving the first information, the second device may input the first information into a model for model inference, which is conducive to increasing a success rate of receiving a plurality of signals by using the model-based receiver. In other words, the first information may be used for performing model inference by the model-based receiver. For example, the first information may be used as input to the model along with a received signal (that is, a plurality of pieces of information).

As described above, receivers may be classified into generalized receivers and non-generalized receivers. In some implementations, if the model-based receiver is a non-generalized receiver, the first information may carry an identity of the receiver (or an identifier of a model) to indicate a model that is required to perform model inference or model training based on the first information.

Certainly, in embodiments of this application, there may be a one-to-one correspondence between non-generalized receivers and candidate values. In this case, the first information may carry the identity of the receiver (or the identifier of the model) to indicate that the corresponding candidate value is corresponding power, thereby reducing overheads caused by transmitting the first information. For details, reference may be made to an example in Implementation 1.

In some scenarios, the plurality of signals may be transmitted through one or more layers. In other words, the transmission resource described above may be one of a plurality of transmission resources. Correspondingly, the plurality of transmission resources may correspond to one or more layers. In some scenarios, the layer may also be referred to as a scheduling layer. Typically, a quantity of scheduling layers is equal to a rank (rank, r) of a corresponding pre-encoding matrix. In this case, the first information may indicate, at a granularity of a layer, power used for transmitting a signal. This is described below in conjunction with Embodiment 1 and Embodiment 2.

### Embodiment 1

In some implementations, the first information is used to indicate power used for transmitting different signals among the plurality of signals on a transmission resource corresponding to each layer among the one or more layers. This is described below in conjunction with Implementation 1 and Implementation 2.

In **Implementation 1**, on all transmission resources corresponding to each layer among the one or more layers, same power is used for transmitting different signals among the plurality of signals. In other words, on all transmission resources corresponding to each layer, same power is used for transmitting different signals among the plurality of signals. For example, the plurality of signals include pilots. A power allocation ratio for pilots corresponding to transmission resources of each layer is P, where P denotes a proportion of power for transmitting the pilots in total power.

In some implementations, the first information is used to indicate, from one or more candidate power values, power used for transmitting different signals among the plurality of signals. In other words, the power used for transmitting different signals among the plurality of signals may be selected from the candidate values. Therefore, the candidate value may also be referred to as a "candidate power value" which is conducive to reducing overheads caused by transmitting the first information.

In embodiments of this application, a quantity of candidate values is not limited. For example, the quantity of candidate values may be one or more. In addition, a method for obtaining the candidate values is not limited in embodiments of this application. In some implementations, the candidate values may be predefined, pre-configured, or configured by a network device.

For example, the plurality of signals include pilots, the total power is 1, and the candidate values include [0.1, 0.2, 0.3, 0.4, 0.5, 0.6, 0.7, 0.8]. Correspondingly, the first information may indicate, from the candidate values by using three bits, a power allocation ratio used for transmitting the pilots. In other words, the bits "000" in the first information indicate that the power allocation ratio used for transmitting the pilots is 0.1. The bits "001" in the first information indicate that the power allocation ratio used for transmitting the pilots is 0.2. The bits "010" in the first information indicate that the power allocation ratio used for transmitting the pilots is 0.3. The bits "011" in the first information indicate that the power allocation ratio used for transmitting the pilots is 0.4. The bits "101" in the first information indicate that the power allocation ratio used for transmitting the pilots is 0.6. The bits "110" in the first information indicate that the power allocation ratio used for transmitting the pilots is 0.7. The bits "111" in the first information indicate that the power allocation ratio used for transmitting the pilots is 0.8.

In embodiments of this application, a relationship between the first information and the total quantity of layers scheduled by the network device is not limited. In some implementations, the first information is associated with the total quantity of layers scheduled by the network device. In other words, a quantity of parameters carried in the first information is associated with the total quantity of layers scheduled. In other words, if the quantity of layers scheduled by the network device is r (or in other words, the rank of the pre-encoding matrix is r), then on all transmission resources corresponding to each layer among the r layers, power used for transmitting different signals among the plurality of signals is a first value, where r is a positive integer. Assuming that the plurality of signals include pilots and the quantity of layers scheduled by the network device is r, a power allocation ratio for pilots corresponding to transmission resources of each of the r layers is Pᵣ.

For example, if the AI receiver is a generalized receiver, the plurality of signals include pilots and data signals, and the total quantity of layers scheduled by the network device is r = 4, a pilot power allocation ratio corresponding to each layer is Pᵣ, where r = 1, 2, 3, or 4. Candidate values for Pᵣ are: [0.05, 0.15, 0.2, 0.25, 0.3, 0.35, 0.4, 0.5]. Correspondingly, the first information may occupy one bit to indicate Pᵣ corresponding to each layer.

The 1^{st} to 3^{rd} bits indicate a pilot power allocation ratio P₁ when r = 1. If the bits in the first information are "000", it indicates that the power allocation ratio used for transmitting the pilots is 0.05. The bits "001" in the first information indicate that the power allocation ratio used for transmitting the pilots is 0.15. The bits "010" in the first information indicate that the power allocation ratio used for transmitting the pilots is 0.2. The bits "011" in the first information indicate that the power allocation ratio used for transmitting the pilots is 0.25. The bits "100" in the first information indicate that the power allocation ratio used for transmitting the pilots is 0.3. The bits "101" in the first information indicate that the power allocation ratio used for transmitting the pilots is 0.35. The bits "110" in the first information indicate that the power allocation ratio used for transmitting the pilots is 0.4. The bits "111" in the first information indicate that the power allocation ratio used for transmitting the pilots is 0.5.

The 4^{th} to 6^{th} bits indicate the pilot power allocation ratio P₂ when r = 2. For a correspondence between values of the 4^{th} to 6^{th} bits and the power allocation ratio, reference may be made to the foregoing description.

The 7^{th} to 9^{th} bits indicate the pilot power allocation ratio P₃ when r = 3. For a correspondence between values of the 7^{th} to 9^{th} bits and the power allocation ratio, reference may be made to the foregoing description.

The 9^{th} to 12^{th} bits indicate the pilot power allocation ratio P₄ when r = 4. For a correspondence between values of the 9^{th} to 12^{th} bits and the power allocation ratio, reference may be made to the foregoing description.

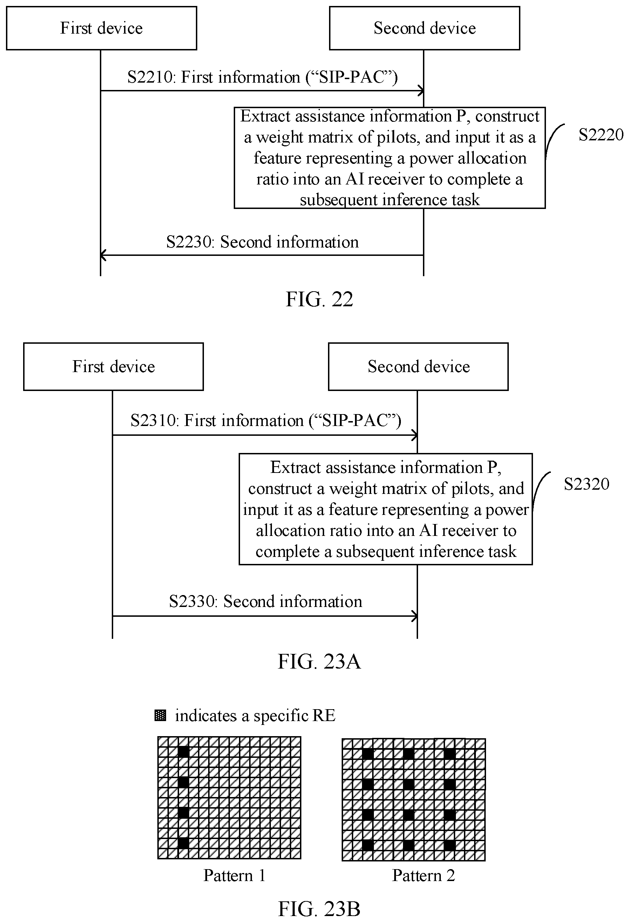

In some other implementations, the first information is unrelated to the total quantity of layers scheduled by the network device. In other words, regardless of the quantity of layers scheduled by the network device, on all transmission resources corresponding to each layer, power used for transmitting different signals among the plurality of signals is a first value. Assuming that the plurality of signals include pilots, regardless of the quantity of layers scheduled by the network device, a power allocation ratio for pilots corresponding to transmission resources of each layer is P. The first information in embodiments of this application is described below with reference to FIG. 22.

For example, if the AI receiver is a non-generalized receiver, the plurality of signals include pilots and data signals, and the total quantity of layers scheduled by the network device is r = 4, a pilot power allocation ratio corresponding to each layer is Pᵣ, where r = 1, 2, 3, or 4. Candidate values for Pᵣ are: [0.05, 0.15, 0.2, 0.25, 0.3, 0.35, 0.4, 0.5], and these eight candidate values may correspond to identifiers of eight AI receivers: [0, 1, 2, 3, 4, 5, 6, 7], where there is a one-to-one correspondence between the candidate values and the identifiers of the AI receivers. Correspondingly, the first information may occupy one bit to indicate an identifier of an AI receiver corresponding to each layer.

The 1^{st} to 3^{rd} bits indicate an identifier of an AI receiver. If the bits in the first information are "000", it indicates that the identifier of the AI receiver is 0. The bits "001" in the first information indicate that an identifier of an AI receiver is 1. The bits "010" in the first information indicate that the identifier of the AI receiver is 2. The bits "011" in the first information indicate that the identifier of the AI receiver is 3. The bits "100" in the first information indicate that the identifier of the AI receiver is 4. The bits "101" in the first information indicate that the identifier of the AI receiver is 5. The bits "110" in the first information indicate that the identifier of the AI receiver is 6. The bits "111" in the first information indicate that the identifier of the AI receiver is 7.

Correspondingly, since there is a one-to-one correspondence between the candidate values and the identifiers of the AI receivers, the receiver may determine a pilot power allocation ratio based on an identifier of an AI receiver and this correspondence.

It should be noted that if the quantity of layers corresponding to the quantity of parameters carried in the first information is greater than the total quantity of layers, extra parameters may be considered meaningless.

In **Implementation 2**, on part or all of resource units corresponding to each layer among the one or more layers, different power is used for transmitting different signals among the plurality of signals.

In some implementations, a plurality of transmission resources corresponding to each layer include a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources. In other words, assuming that the plurality of transmission resources include a specific transmission resource and a non-specific transmission resource, in this case, the specific transmission resource corresponds to one power value, and the non-specific transmission resource corresponds to another power value. Certainly, in embodiments of this application, different transmission resources among the plurality of transmission resources may correspond to different power. Alternatively, in embodiments of this application, a transmission resource corresponding to each layer may include another type quantity of transmission resources. For example, the transmission resource corresponding to each layer includes three types of transmission resources, where the three types of transmission resources may correspond to three power values. For another example, the transmission resource corresponding to each layer includes four types of transmission resources, where the four types of transmission resources may correspond to three power values.

In some implementations, the first information carries one or more of the following: location information of the first type of transmission resources among the plurality of transmission resources corresponding to each layer; location information of the second type of transmission resources among the plurality of transmission resources corresponding to each layer; information used to indicate, from one or more candidate power values, power used for transmitting different signals among the plurality of signals by using the first type of transmission resources; or information used to indicate, from one or more candidate power values, power used for transmitting different signals among the plurality of signals by using the second type of transmission resources.

In embodiments of this application, there is no limitation on a manner of indicating the location information. For example, the location information described above may be an index of the transmission resource. For another example, the location information described above may include information about time-domain resources occupied by the transmission resource, and/or information about time-domain resources occupied by the transmission resource. For another example, the location information described above may be indicated by using a pattern. If the first type of transmission resources are used for transmitting pilots, the location information of the first type of transmission resources may be determined based on a pilot pattern. For the pilot pattern, reference may be made to the foregoing description.

In embodiments of this application, the information about the time-domain resources is not limited. In some implementations, the information about the time-domain resources may be used to indicate time-domain locations of the time-domain resources. For example, the information about the time-domain resources may include indexes of the time-domain resources.

In addition, in embodiments of this application, the information about the frequency-domain resources is not limited. In some implementations, the information about the frequency-domain resources may be used to indicate frequency-domain locations of the frequency-domain resources. For example, the information about the frequency-domain resources may include indexes of the frequency-domain resources.

In embodiments of this application, a relationship between the first information and the total quantity of layers scheduled by the network device is not limited. In some implementations, the first information is associated with the total quantity of layers scheduled by the network device. In other words, a quantity of parameters carried in the first information is associated with the total quantity of layers scheduled by the network device. If the quantity of layers scheduled by the network device is r (or in other words, the rank of the pre-encoding matrix is r), then on each of the r layers, the power corresponding to the first type of transmission resources may be a first value, and the power corresponding to the second type of transmission resources may be a second value, where r is a positive integer, k is a positive integer less than or equal to r, and the first value is different from the second value.

Assuming that the plurality of signals include pilots, and the quantity of layers scheduled by the network device is r, then a power allocation ratio for a specific transmission resource on each of the r layers is Pᵣ^{s}, and a power allocation ratio for transmission resources other than the specific transmission resource on each layer is Pᵣ, where Pᵣ^{s} and Pᵣ denote a proportion of power used for transmitting pilots in total power, and a value of Pᵣ^{s} is different from a value of Pᵣ.

For example, if the AI receiver is a generalized receiver, the plurality of signals include pilots and data signals, and the total quantity of layers scheduled by the network device is r = 2, a pilot power allocation ratio corresponding to each layer includes Pᵣ^{s} and Pᵣ, where a power allocation ratio for a specific RE is Pᵣ^{s}, and a power allocation ratio for REs other than the specific RE on each layer is Pᵣ, where r = 1, or 2. Candidate values for Pᵣ^{s} and Pᵣ are: [0.05, 0.15, 0.2, 0.25, 0.3, 0.35, 0.4, 0.5]. Correspondingly, the first information may occupy 12 bits to indicate Pᵣ^{s} and Pᵣ corresponding to each layer.

The 1^{st} to 3^{rd} bits indicate a pilot power allocation ratio P₁^{s} when r = 1. If the bits in the first information are "000", it indicates that the power allocation ratio used for transmitting the pilots is 0.05. The bits "001" in the first information indicate that the power allocation ratio used for transmitting the pilots is 0.15. The bits "010" in the first information indicate that the power allocation ratio used for transmitting the pilots is 0.2. The bits "011" in the first information indicate that the power allocation ratio used for transmitting the pilots is 0.25. The bits "100" in the first information indicate that the power allocation ratio used for transmitting the pilots is 0.3. The bits "101" in the first information indicate that the power allocation ratio used for transmitting the pilots is 0.35. The bits "110" in the first information indicate that the power allocation ratio used for transmitting the pilots is 0.4. The bits "111" in the first information indicate that the power allocation ratio used for transmitting the pilots is 0.5.

The 4^{th} to 6^{th} bits indicate the pilot power allocation ratio P₁ when r = 1. For a correspondence between values of the 4^{th} to 6^{th} bits and the power allocation ratio, reference may be made to the foregoing description.

The 7^{th} to 9^{th} bits indicate the pilot power allocation ratio P₂^{s} when r = 2. For a correspondence between values of the 7^{th} to 9^{th} bits and the power allocation ratio, reference may be made to the foregoing description.

The 9^{th} to 12^{th} bits indicate the pilot power allocation ratio P₂ when r = 2. For a correspondence between values of the 9^{th} to 12^{th} bits and the power allocation ratio, reference may be made to the foregoing description.

In some other implementations, the first information is unrelated to the total quantity of layers scheduled by the network device. In other words, a quantity of parameters carried in the first information is unrelated to the total quantity of layers scheduled by the network device. Regardless of the quantity of layers scheduled by the network device, the power corresponding to the first type of transmission resources on each layer is a first value, and the power corresponding to the second type of transmission resources on each layer is a second value, where the first value is different from the second value.

It should be noted that if the quantity of layers corresponding to the quantity of parameters carried in the first information is greater than the total quantity of layers, extra parameters may be considered meaningless.

Assuming that the plurality of signals include pilots, regardless of the quantity of layers scheduled by the network device, a power allocation parameter for a specific transmission resource on each layer is P^{s}, and a power allocation parameter for transmission resources other than the specific transmission resource on each layer is P, where Pₖ^{s} and Pₖ denote a proportion of power used for transmitting pilots in total power, and a value of Pₖ^{s} is different from a value of Pₖ. This is described below with reference to FIG. 23A and FIG. 23B.

### Embodiment 2

In some implementations, the first information is used to indicate power used for transmitting the plurality of signals in a transmission resource corresponding to a k^{th} layer among the one or more layers, where k is a positive integer greater than or equal to 1, or a value of k is 1, 2, 3, or K, where K is a positive integer greater than or equal to 1. This is described below in conjunction with Implementation 3 and Implementation 4.

In **Implementation 3**, same power is used for transmitting different signals among the plurality of signals on all transmission resources corresponding to the k^{th} layer. In other words, power used for transmitting different signals among the plurality of signals on all transmission resources corresponding to the k^{th} layer is identical. For example, the plurality of signals include pilots. A power allocation ratio for pilots corresponding to each of transmission resources on the k^{th} layer is Pₖ, where Pₖ denotes a proportion of power for transmitting the pilots in total power.

In some implementations, the first information includes an identifier of the k^{th} layer, and/or information used to indicate, from one or more candidate power values, power used for transmitting different signals among the plurality of signals.

In some implementations, the first information includes an identifier of the k^{th} layer, where the identifier of the k^{th} layer may be, for example, an index of the k^{th} layer.

In some implementations, the first information is used to indicate, from one or more candidate power values, power used for transmitting different signals among the plurality of signals. In other words, the power used for transmitting different signals among the plurality of signals may be selected from the candidate values. Therefore, the candidate value may also be referred to as a "candidate power value" which is conducive to reducing overheads caused by transmitting the first information.

In embodiments of this application, a quantity of candidate values is not limited. For example, the quantity of candidate values may be one or more. In addition, a method for obtaining the candidate values is not limited in embodiments of this application. In some implementations, the candidate values may be predefined, pre-configured, or configured by a network device.

For example, if the AI receiver is a generalized receiver, the plurality of signals include pilots, and a value of k is 1, 2, 3, or 4, accordingly, the first information may indicate, by using three bits, power corresponding to the k^{th} layer. Since a value of k ranges from 1 to 4, the first information requires a total of 12 bits to indicate the power corresponding to the k^{th} layer, where the 1^{st} to 3^{rd} bits of the first information are used to indicate power corresponding to the 1^{st} layer (k = 1), the 4^{th} to 6^{th} bits of the first information are used to indicate power corresponding to the 2^{nd} layer (k = 2), the 7^{th} to 9^{th} bits of the first information are used to indicate power corresponding to the 3^{rd} layer (k = 3), and the 10^{th} to 12^{th} bits of the first information are used to indicate power corresponding to the 4^{th} layer (k = 4).

In embodiments of this application, a relationship between the first information and the total quantity of layers scheduled by the network device is not limited. In some implementations, the first information is associated with the total quantity of layers scheduled by the network device. In other words, a quantity of parameters carried in the first information is associated with the total quantity of layers scheduled by the network device. If the quantity of layers scheduled by the network device is r (or in other words, the rank of the pre-encoding matrix is r), then on all transmission resources corresponding to the k^{th} layer among the r layers, power used for transmitting different signals among the plurality of signals is a first value, where r is a positive integer, and k is a positive integer less than or equal to r. Assuming that the plurality of signals include pilots, and the quantity of layers scheduled by the network device is r, the power allocation ratio for pilots corresponding to the transmission resource of the k^{th} layer among the r layers is Pᵣ₋ₖ, where Pᵣ₋ₖ indicates a proportion of power for transmitting the pilots in total power.

For example, the plurality of signals include pilots and data signals, and the total quantity of layers scheduled by the network device is r = 4, a pilot power allocation ratio corresponding to the k^{th} layer is Pᵣ₋ₖ, where k is less than or equal to r. Then, the first information may include four different sets of parameters to indicate pilot power allocation ratios corresponding to the four layers. A quantity of candidate power values contained in the four sets of parameters may be r. Accordingly, the four sets of parameters include: {P₁₋₁}, {P₂₋₁, P₂₋₂}, {P₃₋₁, P₃₋₂, P₃₋₃ }, and {P₄₋₁, P₄₋₂, P₄₋₃, P₄₋₃}.

{P₁₋₁} corresponds to a power candidate value for the layer 1, {P₂₋₁, P₂₋₂} corresponds to candidate power values for the layer 2, {P₃₋₁, P₃₋₂, P₃₋₃} corresponds to candidate power values for the layer 3, and {P₄₋₁, P₄₋₂, P₄₋₃, P₄₋₃} corresponds to candidate power values for the layer 4.

In some other implementations, the first information is unrelated to the total quantity of layers scheduled by the network device. In other words, regardless of the quantity of layers scheduled by the network device, on all transmission resources corresponding to the k^{th} layer, power used for transmitting different signals among the plurality of signals is a first value. Assuming that the plurality of signals include pilots, regardless of the quantity of layers scheduled by the network device, the power allocation ratio for pilots corresponding to the transmission resource of the k^{th} layer is Pₖ, where Pₖ indicates a proportion of power for transmitting the pilots in total power.

For example, if the AI receiver is a generalized receiver, the plurality of signals include pilots and data signals, and the total quantity of layers scheduled by the network device is r = 4, a pilot power allocation ratio corresponding to each layer includes Pₖ, where r = 1, 2, 3, or 4. Candidate values for Pₖ are: [0.05, 0.15, 0.2, 0.25, 0.3, 0.35, 0.4, 0.5]. Accordingly, the first information may occupy 12 bits to indicate Pₖ corresponding to the k^{th} layer.

The 1^{st} to 3^{rd} bits indicate a pilot power allocation ratio P₁ when r = 1. If the bits in the first information are "000", it indicates that the power allocation ratio used for transmitting the pilots is 0.05. The bits "001" in the first information indicate that the power allocation ratio used for transmitting the pilots is 0.15. The bits "010" in the first information indicate that the power allocation ratio used for transmitting the pilots is 0.2. The bits "011" in the first information indicate that the power allocation ratio used for transmitting the pilots is 0.25. The bits "100" in the first information indicate that the power allocation ratio used for transmitting the pilots is 0.3. The bits "101" in the first information indicate that the power allocation ratio used for transmitting the pilots is 0.35. The bits "110" in the first information indicate that the power allocation ratio used for transmitting the pilots is 0.4. The bits "111" in the first information indicate that the power allocation ratio used for transmitting the pilots is 0.5.

The 4^{th} to 6^{th} bits indicate the pilot power allocation ratio P₂ when r = 2. For a correspondence between values of the 4^{th} to 6^{th} bits and the power allocation ratio, reference may be made to the foregoing description.

The 7^{th} to 9^{th} bits indicate the pilot power allocation ratio P₃ when r = 3. For a correspondence between values of the 7^{th} to 9^{th} bits and the power allocation ratio, reference may be made to the foregoing description.

The 9^{th} to 12^{th} bits indicate the pilot power allocation ratio P₄ when r = 4. For a correspondence between values of the 9^{th} to 12^{th} bits and the power allocation ratio, reference may be made to the foregoing description.

It should be noted that if the quantity of layers corresponding to the quantity of parameters carried in the first information is greater than the total quantity of layers, extra parameters may be considered meaningless.

In **Implementation 4**, different power is used for transmitting different signals among the plurality of signals on part or all of transmission resources corresponding to the k^{th} layer, or in other words, partially or entirely different power is used for transmitting different signals among the plurality of signals on the transmission resource corresponding to the k^{th} layer.

In some implementations, the transmission resource corresponding to the k^{th} layer includes a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources. In other words, assuming that the plurality of transmission resources include a specific transmission resource and a non-specific transmission resource, in this case, the specific transmission resource corresponds to one power value, and the non-specific transmission resource corresponds to another power value. Certainly, in embodiments of this application, different transmission resources among the plurality of transmission resources may correspond to different power. Alternatively, in embodiments of this application, another type quantity of transmission resources may be included. For example, the transmission resource corresponding to the k^{th} layer includes three types of transmission resources, where the three types of transmission resources may correspond to three power values. For another example, the transmission resource corresponding to the k^{th} layer includes four types of transmission resources, where the four types of transmission resources may correspond to three power values.

In some implementations, the first information carries one or more of the following: the first information including an identifier of the k^{th} layer; location information of the first type of transmission resources among the transmission resource corresponding to the k^{th} layer; location information of the second type of transmission resources among the transmission resource corresponding to the k^{th} layer; information used to indicate, from one or more candidate power values, power used for transmitting different signals among the plurality of signals by using the first type of transmission resources; or information used to indicate, from one or more candidate power values, power used for transmitting different signals among the plurality of signals by using the second type of transmission resources.

In embodiments of this application, there is no limitation on a manner of indicating the location information. For example, the location information described above may be an index of the transmission resource. For another example, the location information described above may include information about time-domain resources occupied by the transmission resource, and/or information about time-domain resources occupied by the transmission resource. For another example, the location information described above may be indicated by using a pattern. If the first type of transmission resources are used for transmitting pilots, the location information of the first type of transmission resources may be determined based on a pilot pattern. For the pilot pattern, reference may be made to the foregoing description.

In embodiments of this application, the information about the time-domain resources is not limited. In some implementations, the information about the time-domain resources may be used to indicate time-domain locations of the time-domain resources. For example, the information about the time-domain resources may include indexes of the time-domain resources.

In addition, in embodiments of this application, the information about the frequency-domain resources is not limited. In some implementations, the information about the frequency-domain resources may be used to indicate frequency-domain locations of the frequency-domain resources. For example, the information about the frequency-domain resources may include indexes of the frequency-domain resources.

In some implementations, location information of the first type of transmission resources in a (k+n)^{th} layer among the one or more layers may be determined based on the location information of the first type of transmission resources in the k^{th} layer, where n is a positive integer greater than or equal to 1, which is conducive to reducing a quantity of bits of the first information used for carrying the location information, thereby reducing overheads caused by transmitting the first information.

In embodiments of this application, there is no limitation on a manner of determining the location information of the first type of transmission resources in the (k+n)^{th} layer. In some implementations, the location information of the first type of transmission resources in the (k+n)^{th} layer may be obtained by shifting, by N time-domain units along a direction of time progression (or in other words, along a direction in which indexes of time-domain units increase), from the location information of the first type of transmission resources in the k^{th} layer, where N is a positive integer greater than or equal to 0. Certainly, in embodiments of this application, the location information of the first type of transmission resources in the (k+n)^{th} layer may be obtained by shifting, by N time-domain units along a direction opposite to time progression (or in other words, along a direction in which indexes of time-domain units decrease), from the location information of the first type of transmission resources in the k^{th} layer, where N is a positive integer greater than or equal to 0.

In embodiments of this application, the time-domain units described above are not limited. For example, the time-domain units may be symbols. For another example, the time-domain units may be mini-slots. Certainly, in embodiments of this application, the time-domain units may be a period of time.

For example, if n = 1, the location information of the first type of transmission resources in the (k+1)^{th} layer may be obtained by shifting, by one time-domain unit (for example, symbol) along a direction of time progression, from the location information of the first type of transmission resources in the k^{th} layer.

In some other implementations, the location information of the first type of transmission resources in the (k+n)^{th} layer may be obtained by shifting, by M frequency-domain units along a direction in which frequencies increase (or in other words, along a direction in which indexes of frequency-domain units increase), from the location information of the first type of transmission resources in the k^{th} layer, where M is a positive integer greater than or equal to 0. Certainly, in embodiments of this application, the location information of the first type of transmission resources in the (k+n)^{th} layer may be obtained by shifting, by M time-domain units along a direction in which frequencies decrease (or in other words, along a direction in which indexes of frequency-domain units decrease), from the location information of the first type of transmission resources in the k^{th} layer, where M is a positive integer greater than or equal to 0.

In embodiments of this application, the frequency-domain units described above are not limited. For example, the frequency-domain units may be subcarriers. For another example, the frequency-domain units may be carriers. Certainly, in embodiments of this application, the frequency-domain units may be a frequency band.

FIG. 20A and FIG. 20B each show a manner of determining locations of a first type of transmission resources according to an embodiment of this application. It is assumed that the transmission resource is an RE in an RB, and the first type of transmission resources in the second layer (k = 2) shift by one RE in frequency domain along a direction in which frequencies decrease. As shown in FIG. 20A, when k = 1, the first type of transmission resources in the first layer occupy the 3^{rd} symbol in time domain and occupy REs respectively corresponding to the 2^{nd}, 5^{th}, 8^{th}, and 11^{th} subcarriers in frequency domain. As shown in FIG. 20B, when k = 2, the first type of transmission resources in the second layer occupy the 3^{rd} symbol in time domain and occupy the 1^{st}, 4^{th}, 7^{th}, and 10^{th} subcarriers in frequency domain.

In embodiments of this application, a relationship between the first information and the total quantity of layers scheduled by the network device is not limited. In some implementations, the first information is associated with the total quantity of layers scheduled by the network device. In other words, a quantity of parameters in the first information is associated with the total quantity of layers scheduled by the network device. If the quantity of layers scheduled by the network device is r (or in other words, the rank of the pre-encoding matrix is r), power used for transmitting different signals among the plurality of signals on the first type of transmission resources of the k^{th} layer among the r layers is a first value, and power used for transmitting different signals among the plurality of signals on the second type of transmission resources of the k^{th} layer is a second value, where r is a positive integer, k is a positive integer less than or equal to r, and the first value is different from the second value. Correspondingly, the first value and second value corresponding to the k^{th} layer contained in the first information may be considered as a set of parameters. A quantity of sets of parameters carried in the first information is equal to r.

Assuming that the plurality of signals include pilots, and the quantity of layers scheduled by the network device is r, a power allocation parameter for a specific transmission resource on the k^{th} layer among the r layers is Pᵣ₋ₖ^{s}, and a power allocation parameter for transmission resources other than the specific transmission resource on the k^{th} layer is Pᵣ₋ₖ, where Pᵣ₋ₖ^{s} and Pᵣ₋ₖ denote a proportion of power used for transmitting the pilots in total power, and a value of Pᵣ₋ₖ^{s} is different from a value of Pᵣ₋ₖ, where r = 1, 2, ..., k.

For example, assuming that the plurality of signals include pilots, the quantity of layers scheduled by the network device is r = 2, and pilot power allocation ratios corresponding to specific RE locations in the two layers are P₁^{s} and P₂^{s}, respectively; and pilot power allocation ratios corresponding to other RE locations in the two layers are P₁ and P₂, respectively. It is assumed that candidate values for P₁^{s}, P₂^{s}, P₁, and P₂ are: [0.1, 0.2, 0.3, 0.4]. In this case, the first information may occupy 10 bits to indicate the pilot power allocation ratio corresponding to the k^{th} layer.

The 1^{st} to 5^{th} bits of the first information correspond to the first layer, and the 1^{st} bit is used to indicate a location of a specific RE in the first layer. As shown in FIG. 23B below, when a value of the 1^{st} bit is 1, it indicates that a pattern used for determining the location of the specific RE is a pattern 1; and when a value of the 1^{st} bit is 0, it indicates that a pattern used for determining the location of the specific RE is a pattern 2. The 2^{nd} and 3^{rd} bits indicate a value of P₁^{s}. If a value of the 2^{nd} and 3^{rd} bits is 00, it indicates that the pilot power allocation ratio P₁^{s} is 0.1. If a value of the 2^{nd} and 3^{rd} bits is 01, it indicates that the pilot power allocation ratio P₁^{s} is 0.2. If a value of the 2^{nd} and 3^{rd} bits is 10, it indicates that the pilot power allocation ratio P₁^{s} is 0.3. If a value of the 2^{nd} and 3^{rd} bits is 11, it indicates that the pilot power allocation ratio P₁^{s} is 0.4. The 4^{th} and 5^{th} bits indicate a pilot power allocation ratio P₁. If a value of the 4^{th} and 5^{th} bits is 00, it indicates that the pilot power allocation ratio P₁ is 0.1. If a value of the 4^{th} and 5^{th} bits is 01, it indicates that the pilot power allocation ratio P₁ is 0.2. If a value of the 4^{th} and 5^{th} bits is 10, it indicates that the pilot power allocation ratio P₁ is 0.3. If a value of the 4^{th} and 5^{th} bits is 11, it indicates that the pilot power allocation ratio P₁ is 0.4.

The 6^{th} to 10^{th} bits of the first information correspond to the first layer, and the 6^{th} bit is used to indicate a location of the specific RE in the second layer. For a specific manner of indication, reference may be made to an indication manner of the 1^{st} bit. The 7^{th} to 11^{th} bits indicate a pilot power allocation ratio P₂^{s}. The 12^{th} and 16^{th} bits indicate a pilot power allocation ratio P₂.

In some other implementations, the first information is unrelated to the total quantity of layers scheduled by the network device. In other words, a quantity of parameters carried in the first information is unrelated to the total quantity of layers scheduled by the network device. Regardless of the quantity of layers scheduled by the network device, different power is used for transmitting different signals among the plurality of signals on part or all of transmission resources corresponding to the k^{th} layer. Assuming that the plurality of signals include pilots, regardless of the quantity of layers scheduled by the network device, a power allocation ratio for a specific transmission resource on the k^{th} layer is Pₖ^{s}, and a power allocation ratio for transmission resources other than the specific transmission resource on the k^{th} layer is Pₖ, where Pₖ^{s} and Pₖ denote a proportion of power used for transmitting the pilots in total power, and a value of Pₖ^{s} is different from a value of Pₖ.

For example, the plurality of signals include pilots and data signals, regardless of the total quantity of layers scheduled by the network device, a pilot power allocation ratio corresponding to each layer includes Pₖ, where r = 1, 2, 3, or 4. Candidate values for Pₖ are: [0.05, 0.15, 0.2, 0.25, 0.3, 0.35, 0.4, 0.5]. Accordingly, the first information may occupy 12 bits to indicate Pₖ corresponding to the k^{th} layer.

The 1^{st} to 3^{rd} bits indicate a pilot power allocation ratio P₁ for the 1^{st} layer. If the bits in the first information are "000", it indicates that the power allocation ratio used for transmitting the pilots is 0.05. The bits "001" in the first information indicate that the power allocation ratio used for transmitting the pilots is 0.15. The bits "010" in the first information indicate that the power allocation ratio used for transmitting the pilots is 0.2. The bits "011" in the first information indicate that the power allocation ratio used for transmitting the pilots is 0.25. The bits "100" in the first information indicate that the power allocation ratio used for transmitting the pilots is 0.3. The bits "101" in the first information indicate that the power allocation ratio used for transmitting the pilots is 0.35. The bits "110" in the first information indicate that the power allocation ratio used for transmitting the pilots is 0.4. The bits "111" in the first information indicate that the power allocation ratio used for transmitting the pilots is 0.5.

The 4^{th} to 6^{th} bits indicate the pilot power allocation ratio P₂ for the 2^{nd} layer. For a correspondence between values of the 4^{th} to 6^{th} bits and the power allocation ratio, reference may be made to the foregoing description.

The 7^{th} to 9^{th} bits indicate the pilot power allocation ratio P₃ for the 3^{rd} layer. For a correspondence between values of the 7^{th} to 9^{th} bits and the power allocation ratio, reference may be made to the foregoing description.

The 9^{th} to 12^{th} bits indicate the pilot power allocation ratio P₄ for the 4^{th} layer. For a correspondence between values of the 9^{th} to 12^{th} bits and the power allocation ratio, reference may be made to the foregoing description.

It should be noted that if the quantity of layers corresponding to the quantity of parameters carried in the first information is greater than the total quantity of layers, extra parameters may be considered meaningless.

In addition, it should be noted that in the solution described above, the first information may carry indication information to indicate, from candidate power values, power used for transmitting different signals among the plurality of signals. Certainly, in embodiments of this application, the first information may alternatively carry all candidate values to be transmitted to the receiving end.

The foregoing describes the first information in embodiments of this application, and the following describes a process of a method for transmitting the first information in embodiments of this application. In some implementations, after step S1910, the foregoing method further includes: transmitting, by the second device, second information to the first device, where the second information is used to indicate whether the second device has received the first information, which is conducive to improving reliability of transmitting the first information.

In some implementations, if the second information indicates that the second device has not successfully received the first information, the first device may re-transmit the second information to the second device. Certainly, in embodiments of this application, if the second information indicates that the second device has not successfully received the first information, the first device may terminate a transmission process of the first information.

In some other implementations, the second information may only indicate successful reception of the first information. In other words, if the first information has not been successfully received, the first device may not transmit the second information, which is conducive to reducing overheads caused by transmitting the first information. Correspondingly, the second device may determine whether the second information is received within a first time period to determine whether the transmission of the first information failed. In other words, if the second device does not receive the second information after the first time period elapsed, it may determine that the transmission of the first information failed.

In embodiments of this application, the first time period is not limited. In some implementations, a start time of the first time period may be determined based on a transmission time of the first information. For example, the start time of the first time period may be the transmission time of the first information. For another example, the start time of the first time period may be an instant obtained by shifting, by a time offset value 1, from the transmission time of the first information as a start time.

In embodiments of this application, duration of the first time period is not limited. For example, the duration of the first time period may be predefined, pre-configured, or configured by the network device.

In some scenarios, the first information is also referred to as SIP-PAC. Correspondingly, the second information may be referred to as SIP-PAC reception acknowledgment indication.

The communication method based on the first information in embodiments of this application is described below with reference to FIG. 21. The method shown in FIG. 21 includes steps S2110 to S2140. It should be noted that the following mainly describes a process of the method. For related descriptions of terms (for example, the first information and/or the second information), reference may be made to the foregoing description.

It is assumed that a SIP function configuration of the first device is activated, where the SIP function configuration is used to instruct the first device to activate a function of transmitting the first information.

In step S2110, the first device transmits first information (also referred to as "SIP-PAC") to the second device.

In step S2120, after determining that the SIP-PAC has been successfully received, the second device may extract assistance information (for example, power for transmitting different signals among the plurality of signals) by using the SIP-PAC, and construct input to the AI receiver, to complete an inference task.

In some implementations, the above inference task may include receiving the plurality of signals. For example, the plurality of signals include data signals and pilots. The inference task may include one or more of the following: recovering data symbols from the plurality of signals, recovering data bits from the plurality of signals, and performing channel state estimation.

In step S2130, the second device transmits second information to the first device, where the second information is used to indicate whether the first information has been successfully received.

In some implementations, if the second information indicates that the first information has been successfully received, the process ends. If the second information indicates that the first information has not been successfully received, step S2110 is re-performed.

It should be noted that if the second device has successfully received the first information, order of execution of steps S2120 and S2130 is not limited in embodiments of this application. For example, steps S2120 and S2130 may be performed simultaneously. For another example, step S2120 may be performed before step S2130. For another example, step S2120 may be performed after step S2130.

The transmission process of the first information in scenarios of using a generalized receiver in embodiments of this application is described with reference to FIG. 22 to FIG. 23B by using the communication process shown in FIG. 21 as an example.

Referring to FIG. 22, it is assumed that the plurality of signals include data signals and pilots, the first information is the first information in implementation 1, and the first information is unrelated to the quantity of scheduled layers. In addition, a SIP function configuration of the first device is activated, where the SIP function configuration is used to instruct the first device to activate a function of transmitting the first information.

In step S2210, the first device transmits first information (also referred to as "SIP-PAC") to the second device.

In some implementations, it is assumed that candidate power values are: [0.1, 0.2, 0.3, 0.4, 0.5, 0.6, 0.7, 0.8], and the SIP-PAC indicates, by using three bits, a power allocation ratio for the pilots is P. In other words, if the bits in SIP-PAC are "000", it indicates that the power allocation ratio used for transmitting the pilots is 0.1. The bits "001" in SIP-PAC indicate that the power allocation ratio used for transmitting the pilots is 0.2. The bits "010" in SIP-PAC indicate that the power allocation ratio used for transmitting the pilots is 0.3. The bits "011" in SIP-PAC indicate that the power allocation ratio used for transmitting the pilots is 0.4. The bits "101" in SIP-PAC indicate that the power allocation ratio used for transmitting the pilots is 0.6. The bits "110" in SIP-PAC indicate that the power allocation ratio used for transmitting the pilots is 0.7. The bits "111" in SIP-PAC indicate that the power allocation ratio used for transmitting the pilots is 0.8.

In step S2220, after determining that SIP-PAC has been successfully received, the second device may extract assistance information P by using SIP-PAC, construct a weight matrix of the pilots, and input it as a feature representing the power allocation ratio into the AI receiver to complete a subsequent inference task.

In step S2230, the second device transmits second information to the first device, where the second information is used to indicate whether the first information has been successfully received.

In some implementations, if the second information indicates that the first information has been successfully received, the process ends. If the second information indicates that the first information has not been successfully received, step S2210 is re-performed.

Referring to FIG. 23A, it is assumed that the plurality of signals include data signals and pilots, the first information is the first information in implementation 2, and the first information is unrelated to the quantity of scheduled layers. As shown in FIG. 23B, a location of a specific RE (as an example of the first type of transmission resources) in the plurality of transmission resources may be determined based on a pattern 1 or pattern 2. Candidate power values are [0.1, 0.2, 0.3, 0.4]. In addition, a SIP function configuration of the first device is activated, where the SIP function configuration is used to instruct the first device to activate a function of transmitting the first information.

In step S2310, the first device transmits first information (also referred to as "SIP-PAC") to the second device.

In some implementations, SIP-PAC may indicate, by using one bit, a pattern used for determining the location of the specific RE, where a value of the 1^{st} bit being 1 indicates that the pattern used for determining the location of the specific RE is a pattern 1; and a value of the 1^{st} bit being 0 indicates that the pattern used for determining the location of the specific RE is a pattern 2.

In addition, SIP-PAC indicates, by using two bits, a power allocation ratio corresponding to a specific RE and a power allocation ratio corresponding to a non-specific RE, respectively. In other words, a value of the 2^{nd} and 3^{rd} bits being "000" indicates that the power allocation ratio corresponding to the specific RE is 0.1. A value of the 2^{nd} and 3^{rd} bits being "001" indicates that the power allocation ratio corresponding to the specific RE is 0.2. A value of the 2^{nd} and 3^{rd} bits being "010" indicates that the power allocation ratio corresponding to the specific RE is 0.3. A value of the 2^{nd} and 3^{rd} bits being "011" indicates that the power allocation ratio corresponding to the specific RE is 0.4.

A value of the 4^{th} and 5^{th} bits being "000" indicates that the power allocation ratio corresponding to the specific RE is 0.1. A value of the 4^{th} and 5^{th} bits being "001" indicates that the power allocation ratio corresponding to the specific RE is 0.2. A value of the 4^{th} and 5^{th} bits being "010" indicates that the power allocation ratio corresponding to the specific RE is 0.3. A value of the 4^{th} and 5^{th} bits being "011" indicates that the power allocation ratio corresponding to the specific RE is 0.4.

In step S2320, after determining that SIP-PAC has been successfully received, the second device may extract assistance information P by using SIP-PAC, construct a weight matrix of the pilots, and input it as a feature representing the power allocation ratio into the AI receiver to complete a subsequent inference task.

In step S2330, the second device transmits second information to the first device, where the second information is used to indicate whether the first information has been successfully received.

In some implementations, if the second information indicates that the first information has been successfully received, the process ends. If the second information indicates that the first information has not been successfully received, step S2310 is re-performed.

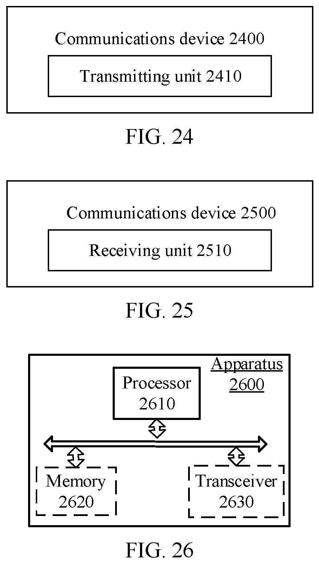

The method embodiments of this application are described above in detail with reference to FIG. 1 to FIG. 23B. Apparatus embodiments of this application are described below in detail with reference to FIG. 24 to FIG. 26. It should be understood that the descriptions of the method embodiments correspond to descriptions of the apparatus embodiments, and therefore, for parts that are not described in detail, reference may be made to the foregoing method embodiments.

FIG. 24 is a schematic diagram of a communications device according to an embodiment of this application. The communications device 2400 shown in FIG. 24 may be a first device. The communications device 2400 includes a transmitting unit 2410.

The transmitting unit 2410 is configured to transmit first information to a second device, where the first information is associated with power for transmitting a signal on a transmission resource, and the signal transmitted on the transmission resource includes a plurality of non-orthogonally superimposed signals.

In some implementations, the first information is used for performing model training or model inference by a model-based receiver, and the receiver is configured to receive the plurality of signals.

In some implementations, the transmission resource is one of a plurality of transmission resources, the plurality of transmission resources correspond to one or more layers, and the first information is used to indicate power used for transmitting different signals among the plurality of signals on a transmission resource corresponding to each layer among the one or more layers.

In some implementations, on all transmission resources corresponding to each layer among the one or more layers, same power is used for transmitting different signals among the plurality of signals.

In some implementations, the first information is used to indicate, from one or more candidate power values, power used for transmitting different signals among the plurality of signals.

In some implementations, different power is used for transmitting different signals among the plurality of signals on part or all of resource units corresponding to each layer among the one or more layers.

In some implementations, a plurality of transmission resources corresponding to the each layer include a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

In some implementations, the first information carries one or more of the following: location information of the first type of transmission resources among the plurality of transmission resources corresponding to the each layer; location information of the second type of transmission resources among the plurality of transmission resources corresponding to the each layer; information used to indicate, from one or more candidate power values, power used for transmitting different signals among the plurality of signals by using the first type of transmission resources; or information used to indicate, from one or more candidate power values, power used for transmitting different signals among the plurality of signals by using the second type of transmission resources.

In some implementations, the transmission resource is one of a plurality of transmission resources, the plurality of transmission resources correspond to one or more layers, and the first information is used to indicate power used for transmitting the plurality of signals in a transmission resource corresponding to a k^{th} layer among the one or more layers, where k is a positive integer greater than or equal to 1.

In some implementations, on all transmission resources corresponding to the k^{th} layer, same power is used for transmitting different signals among the plurality of signals.

In some implementations, the first information includes an identifier of the k^{th} layer, and/or information used to indicate, from one or more candidate power values, power used for transmitting different signals among the plurality of signals.

In some implementations, partially or entirely different power is used for transmitting the plurality of signals in the transmission resource corresponding to the k^{th} layer.

In some implementations, the transmission resource corresponding to the k^{th} layer includes a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

In some implementations, the first information is used to indicate one or more of the following: the first information including an identifier of the k^{th} layer; location information of the first type of transmission resources among the transmission resource corresponding to the k^{th} layer; location information of the second type of transmission resources among the transmission resource corresponding to the k^{th} layer; information used to indicate, from one or more candidate power values, power used for transmitting different signals among the plurality of signals by using the first type of transmission resources; or information used to indicate, from one or more candidate power values, power used for transmitting different signals among the plurality of signals by using the second type of transmission resources.

In some implementations, location information of the first type of transmission resources in a (k+n)^{th} layer among the one or more layers is determined based on location information of the first type of transmission resources in the k^{th} layer, where n is a positive integer greater than or equal to 1.

In some implementations, the first information is associated with a total quantity of layers scheduled by a network device; or the first information is unrelated to a total quantity of layers scheduled by the network device.

In some implementations, the communications device further includes: a receiving unit, configured to receive second information transmitted by the second device, where the second information is used to indicate whether the second device has received the first information.

In some implementations, the plurality of non-orthogonally superimposed signals include a data signal and/or a reference signal.

FIG. 25 is a schematic diagram of a communications device according to another embodiment of this application. The communications device 2500 shown in FIG. 25 is a second device and the communications device 2500 includes a receiving unit 2510.

The receiving unit 2510 is configured to receive first information transmitted by a first device, where the first information is associated with power for transmitting a signal on a transmission resource, and the signal transmitted on the transmission resource includes a plurality of non-orthogonally superimposed signals.

In some implementations, the first information is used for performing model training or model inference by a model-based receiver, and the receiver is configured to receive the plurality of signals.

In some implementations, the transmission resource is one of a plurality of transmission resources, the plurality of transmission resources correspond to one or more layers, and the first information is used to indicate power used for transmitting different signals among the plurality of signals on a transmission resource corresponding to each layer among the one or more layers.

In some implementations, on all transmission resources corresponding to each layer among the one or more layers, same power is used for transmitting different signals among the plurality of signals.

In some implementations, the first information is used to indicate, from one or more candidate power values, power used for transmitting different signals among the plurality of signals.

In some implementations, different power is used for transmitting different signals among the plurality of signals on part or all of resource units corresponding to each layer among the one or more layers.

In some implementations, a plurality of transmission resources corresponding to the each layer include a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

In some implementations, the first information carries one or more of the following: location information of the first type of transmission resources among the plurality of transmission resources corresponding to the each layer; location information of the second type of transmission resources among the plurality of transmission resources corresponding to the each layer; information used to indicate, from one or more candidate power values, power used for transmitting different signals among the plurality of signals by using the first type of transmission resources; or information used to indicate, from one or more candidate power values, power used for transmitting different signals among the plurality of signals by using the second type of transmission resources.

In some implementations, the transmission resource is one of a plurality of transmission resources, the plurality of transmission resources correspond to one or more layers, and the first information is used to indicate power used for transmitting the plurality of signals in a transmission resource corresponding to a k^{th} layer among the one or more layers, where k is a positive integer greater than or equal to 1.

In some implementations, on all transmission resources corresponding to the k^{th} layer, same power is used for transmitting different signals among the plurality of signals.

In some implementations, the first information includes an identifier of the k^{th} layer, and/or information used to indicate, from one or more candidate power values, power used for transmitting different signals among the plurality of signals.

In some implementations, partially or entirely different power is used for transmitting the plurality of signals in the transmission resource corresponding to the k^{th} layer.

In some implementations, the transmission resource corresponding to the k^{th} layer includes a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

In some implementations, the first information is used to indicate one or more of the following: the first information including an identifier of the k^{th} layer; location information of the first type of transmission resources among the transmission resource corresponding to the k^{th} layer; location information of the second type of transmission resources among the transmission resource corresponding to the k^{th} layer; information used to indicate, from one or more candidate power values, power used for transmitting different signals among the plurality of signals by using the first type of transmission resources; or information used to indicate, from one or more candidate power values, power used for transmitting different signals among the plurality of signals by using the second type of transmission resources.

In some implementations, location information of the first type of transmission resources in a (k+n)^{th} layer among the one or more layers is determined based on location information of the first type of transmission resources in the k^{th} layer, where n is a positive integer greater than or equal to 1.

In some implementations, the first information is associated with a total quantity of layers scheduled by a network device; or the first information is unrelated to a total quantity of layers scheduled by the network device.

In some implementations, the communications device further includes: a transmitting unit, configured to transmit second information to the first device, where the second information is used to indicate whether the second device has received the first information.

In some implementations, the plurality of non-orthogonally superimposed signals include a data signal and/or a reference signal.

In an optional embodiment, the transmitting unit 2410 may be a transceiver 2630. The communications device 2400 may further include a transceiver 2630 and a memory 2620, which are specifically shown in FIG. 26.

In an optional embodiment, the receiving unit 2510 may be a transceiver 2630. The communications device 2500 may further include a transceiver 2630 and a memory 2620, which are specifically shown in FIG. 26.

FIG. 26 is a schematic diagram of a structure of a communications apparatus according to an embodiment of this application. Dashed lines in FIG. 26 indicate that a unit or module is optional. The apparatus 2600 may be configured to implement the methods described in the foregoing method embodiments. The apparatus 2600 may be a chip, a terminal device, or a network device.

The apparatus 2600 may include one or more processors 2610. The processor 2610 may support the apparatus 2600 in implementing the methods described in the foregoing method embodiments. The processor 2610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 2600 may further include one or more memories 2620. The memory 2620 stores a program, where the program may be executed by the processor 2610, to cause the processor 2610 to execute the methods described in the method embodiments. The memory 2620 may be independent of the processor 2610 or may be integrated into the processor 2610.

The apparatus 2600 may further include a transceiver 2630. The processor 2610 may communicate with another device or chip by using the transceiver 2630. For example, the processor 2610 may transmit data to and receive data from another device or chip through the transceiver 2630.

An embodiment of this application further provides a computer-readable storage medium for storing a program. The computer-readable storage medium may be applied to a terminal or a network device provided in embodiments of this application, and the program causes a computer to execute the methods executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods executed by the terminal or the network device in various embodiments of this application.

An embodiment of this application further provides a computer program. The computer program may be applied to a terminal or a network device provided in embodiments of this application, and the computer program causes a computer to execute the methods executed by the terminal or the network device in various embodiments of this application.

It should be understood that, in embodiments of this application, a device type of at least one of the first device or the second device is not limited. For example, the first device may be one of the following: a terminal device or a network device. For another example, the second device may be one of the following: a terminal device or a network device.

The terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefining" or "pre-configuring" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Part or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
transmitting, by a first device, first information to a second device, wherein the first information is associated with power for transmitting a signal on a transmission resource, and the signal transmitted on the transmission resource comprises a plurality of non-orthogonally superimposed signals.

2. The method according to claim 1, wherein the first information is used for performing model training or model inference by a model-based receiver, and the receiver is configured to receive the plurality of signals.

3. The method according to claim 1 or 2, wherein the transmission resource is one of a plurality of transmission resources, the plurality of transmission resources correspond to one or more layers, and the first information is used to indicate power used for transmitting different signals among the plurality of signals on a transmission resource corresponding to each layer among the one or more layers.

4. The method according to claim 3, wherein on all transmission resources corresponding to each layer among the one or more layers, same power is used for transmitting different signals among the plurality of signals.

5. The method according to claim 4, wherein the first information is used to indicate, from one or more candidate power values, power used for transmitting different signals among the plurality of signals.

6. The method according to claim 3, wherein different power is used for transmitting different signals among the plurality of signals on part or all of resource units corresponding to each layer among the one or more layers.

7. The method according to claim 6, wherein a plurality of transmission resources corresponding to the each layer comprise a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

8. The method according to claim 7, wherein the first information carries one or more of following:
location information of the first type of transmission resources among the plurality of transmission resources corresponding to the each layer;
location information of the second type of transmission resources among the plurality of transmission resources corresponding to the each layer;
information used to indicate, from one or more candidate power values, power used for transmitting different signals among the plurality of signals by using the first type of transmission resources; or
information used to indicate, from one or more candidate power values, power used for transmitting different signals among the plurality of signals by using the second type of transmission resources.

9. The method according to claim 1 or 2, wherein the transmission resource is one of a plurality of transmission resources, the plurality of transmission resources correspond to one or more layers, and the first information is used to indicate power used for transmitting the plurality of signals in a transmission resource corresponding to a k^{th} layer among the one or more layers, wherein k is a positive integer greater than or equal to 1.

10. The method according to claim 9, wherein on all transmission resources corresponding to the k^{th} layer, same power is used for transmitting different signals among the plurality of signals.

11. The method according to claim 10, wherein the first information comprises an identifier of the k^{th} layer, and/or information used to indicate, from one or more candidate power values, power used for transmitting different signals among the plurality of signals.

12. The method according to claim 11, wherein partially or entirely different power is used for transmitting the plurality of signals in the transmission resource corresponding to the k^{th} layer.

13. The method according to claim 12, wherein the transmission resource corresponding to the k^{th} layer comprises a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

14. The method according to claim 13, wherein the first information is used to indicate one or more of following:
the first information comprising an identifier of the k^{th} layer;
location information of the first type of transmission resources among the transmission resource corresponding to the k^{th} layer;
location information of the second type of transmission resources among the transmission resource corresponding to the k^{th} layer;
information used to indicate, from one or more candidate power values, power used for transmitting different signals among the plurality of signals by using the first type of transmission resources; or
information used to indicate, from one or more candidate power values, power used for transmitting different signals among the plurality of signals by using the second type of transmission resources.

15. The method according to claim 13, wherein location information of the first type of transmission resources in a (k+n)^{th} layer among the one or more layers is determined based on location information of the first type of transmission resources in the k^{th} layer, wherein n is a positive integer greater than or equal to 1.

16. The method according to any one of claims 1 to 15, wherein the first information is associated with a total quantity of layers scheduled by a network device; or
the first information is unrelated to a total quantity of layers scheduled by the network device.

17. The method according to any one of claims 1 to 16, wherein the method further comprises:
receiving, by the first device, second information transmitted by the second device, wherein the second information is used to indicate whether the second device has received the first information.

18. The method according to any one of claims 1 to 17, wherein the plurality of non-orthogonally superimposed signals comprise a data signal and/or a reference signal.

19. A wireless communication method, comprising:
receiving, by a second device, first information transmitted by a first device, wherein the first information is associated with power for transmitting a signal on a transmission resource, and the signal transmitted on the transmission resource comprises a plurality of non-orthogonally superimposed signals.

20. The method according to claim 19, wherein the first information is used for performing model training or model inference by a model-based receiver, and the receiver is configured to receive the plurality of signals.

21. The method according to claim 19 or 20, wherein the transmission resource is one of a plurality of transmission resources, the plurality of transmission resources correspond to one or more layers, and the first information is used to indicate power used for transmitting different signals among the plurality of signals on a transmission resource corresponding to each layer among the one or more layers.

22. The method according to claim 21, wherein on all transmission resources corresponding to each layer among the one or more layers, same power is used for transmitting different signals among the plurality of signals.

23. The method according to claim 22, wherein the first information is used to indicate, from one or more candidate power values, power used for transmitting different signals among the plurality of signals.

24. The method according to claim 21, wherein different power is used for transmitting different signals among the plurality of signals on part or all of resource units corresponding to each layer among the one or more layers.

25. The method according to claim 24, wherein a plurality of transmission resources corresponding to the each layer comprise a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

26. The method according to claim 25, wherein the first information carries one or more of following:
location information of the first type of transmission resources among the plurality of transmission resources corresponding to the each layer;
location information of the second type of transmission resources among the plurality of transmission resources corresponding to the each layer;
information used to indicate, from one or more candidate power values, power used for transmitting different signals among the plurality of signals by using the first type of transmission resources; or
information used to indicate, from one or more candidate power values, power used for transmitting different signals among the plurality of signals by using the second type of transmission resources.

27. The method according to claim 19 or 20, wherein the transmission resource is one of a plurality of transmission resources, the plurality of transmission resources correspond to one or more layers, and the first information is used to indicate power used for transmitting the plurality of signals in a transmission resource corresponding to a k^{th} layer among the one or more layers, wherein k is a positive integer greater than or equal to 1.

28. The method according to claim 27, wherein on all transmission resources corresponding to the k^{th} layer, same power is used for transmitting different signals among the plurality of signals.

29. The method according to claim 28, wherein the first information comprises an identifier of the k^{th} layer, and/or information used to indicate, from one or more candidate power values, power used for transmitting different signals among the plurality of signals.

30. The method according to claim 29, wherein partially or entirely different power is used for transmitting the plurality of signals in the transmission resource corresponding to the k^{th} layer.

31. The method according to claim 30, wherein the transmission resource corresponding to the k^{th} layer comprises a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

32. The method according to claim 31, wherein the first information is used to indicate one or more of following:
the first information comprising an identifier of the k^{th} layer;
location information of the first type of transmission resources among the transmission resource corresponding to the k^{th} layer;
location information of the second type of transmission resources among the transmission resource corresponding to the k^{th} layer;
information used to indicate, from one or more candidate power values, power used for transmitting different signals among the plurality of signals by using the first type of transmission resources; or
information used to indicate, from one or more candidate power values, power used for transmitting different signals among the plurality of signals by using the second type of transmission resources.

33. The method according to claim 31, wherein location information of the first type of transmission resources in a (k+n)^{th} layer among the one or more layers is determined based on location information of the first type of transmission resources in the k^{th} layer, wherein n is a positive integer greater than or equal to 1.

34. The method according to any one of claims 19 to 33, wherein the first information is associated with a total quantity of layers scheduled by a network device; or
the first information is unrelated to a total quantity of layers scheduled by the network device.

35. The method according to any one of claims 19 to 34, wherein the method further comprises:
transmitting, by the second device, second information to the first device, wherein the second information is used to indicate whether the second device has received the first information.

36. The method according to any one of claims 19 to 35, wherein the plurality of non-orthogonally superimposed signals comprise a data signal and/or a reference signal.

37. A communications device, wherein the communications device is a first device and comprises:
a transmitting unit, configured to transmit first information to a second device, wherein the first information is associated with power for transmitting a signal on a transmission resource, and the signal transmitted on the transmission resource comprises a plurality of non-orthogonally superimposed signals.

38. The communications device according to claim 37, wherein the first information is used for performing model training or model inference by a model-based receiver, and the receiver is configured to receive the plurality of signals.

39. The communications device according to claim 37 or 38, wherein the transmission resource is one of a plurality of transmission resources, the plurality of transmission resources correspond to one or more layers, and the first information is used to indicate power used for transmitting different signals among the plurality of signals on a transmission resource corresponding to each layer among the one or more layers.

40. The communications device according to claim 39, wherein on all transmission resources corresponding to each layer among the one or more layers, same power is used for transmitting different signals among the plurality of signals.

41. The communications device according to claim 40, wherein the first information is used to indicate, from one or more candidate power values, power used for transmitting different signals among the plurality of signals.

42. The communications device according to claim 39, wherein different power is used for transmitting different signals among the plurality of signals on part or all of resource units corresponding to each layer among the one or more layers.

43. The communications device according to claim 42, wherein a plurality of transmission resources corresponding to the each layer comprise a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

44. The communications device according to claim 43, wherein the first information carries one or more of following:
location information of the first type of transmission resources among the plurality of transmission resources corresponding to the each layer;
location information of the second type of transmission resources among the plurality of transmission resources corresponding to the each layer;
information used to indicate, from one or more candidate power values, power used for transmitting different signals among the plurality of signals by using the first type of transmission resources; or
information used to indicate, from one or more candidate power values, power used for transmitting different signals among the plurality of signals by using the second type of transmission resources.

45. The communications device according to claim 37 or 38, wherein the transmission resource is one of a plurality of transmission resources, the plurality of transmission resources correspond to one or more layers, and the first information is used to indicate power used for transmitting the plurality of signals in a transmission resource corresponding to a k^{th} layer among the one or more layers, wherein k is a positive integer greater than or equal to 1.

46. The communications device according to claim 45, wherein on all transmission resources corresponding to the k^{th} layer, same power is used for transmitting different signals among the plurality of signals.

47. The communications device according to claim 46, wherein the first information comprises an identifier of the k^{th} layer, and/or information used to indicate, from one or more candidate power values, power used for transmitting different signals among the plurality of signals.

48. The communications device according to claim 47, wherein partially or entirely different power is used for transmitting the plurality of signals in the transmission resource corresponding to the k^{th} layer.

49. The communications device according to claim 48, wherein the transmission resource corresponding to the k^{th} layer comprises a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

50. The communications device according to claim 49, wherein the first information is used to indicate one or more of following:
the first information comprising an identifier of the k^{th} layer;
location information of the first type of transmission resources among the transmission resource corresponding to the k^{th} layer;
location information of the second type of transmission resources among the transmission resource corresponding to the k^{th} layer;
information used to indicate, from one or more candidate power values, power used for transmitting different signals among the plurality of signals by using the first type of transmission resources; or
information used to indicate, from one or more candidate power values, power used for transmitting different signals among the plurality of signals by using the second type of transmission resources.

51. The communications device according to claim 49, wherein location information of the first type of transmission resources in a (k+n)^{th} layer among the one or more layers is determined based on location information of the first type of transmission resources in the k^{th} layer, wherein n is a positive integer greater than or equal to 1.

52. The communications device according to any one of claims 37 to 51, wherein the first information is associated with a total quantity of layers scheduled by a network device; or
the first information is unrelated to a total quantity of layers scheduled by the network device.

53. The communications device according to any one of claims 37 to 52, wherein the communications device further comprises:
a receiving unit, configured to receive second information transmitted by the second device, wherein the second information is used to indicate whether the second device has received the first information.

54. The communications device according to any one of claims 37 to 53, wherein the plurality of non-orthogonally superimposed signals comprise a data signal and/or a reference signal.

55. A communications device, wherein the communications device is a second device, and comprises:
a receiving unit, configured to receive first information transmitted by a first device, wherein the first information is associated with power for transmitting a signal on a transmission resource, and the signal transmitted on the transmission resource comprises a plurality of non-orthogonally superimposed signals.

56. The communications device according to claim 55, wherein the first information is used for performing model training or model inference by a model-based receiver, and the receiver is configured to receive the plurality of signals.

57. The communications device according to claim 55 or 56, wherein the transmission resource is one of a plurality of transmission resources, the plurality of transmission resources correspond to one or more layers, and the first information is used to indicate power used for transmitting different signals among the plurality of signals on a transmission resource corresponding to each layer among the one or more layers.

58. The communications device according to claim 57, wherein on all transmission resources corresponding to each layer among the one or more layers, same power is used for transmitting different signals among the plurality of signals.

59. The communications device according to claim 58, wherein the first information is used to indicate, from one or more candidate power values, power used for transmitting different signals among the plurality of signals.

60. The communications device according to claim 57, wherein different power is used for transmitting different signals among the plurality of signals on part or all of resource units corresponding to each layer among the one or more layers.

61. The communications device according to claim 60, wherein a plurality of transmission resources corresponding to the each layer comprise a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

62. The communications device according to claim 61, wherein the first information carries one or more of following:
location information of the first type of transmission resources among the plurality of transmission resources corresponding to the each layer;
location information of the second type of transmission resources among the plurality of transmission resources corresponding to the each layer;
information used to indicate, from one or more candidate power values, power used for transmitting different signals among the plurality of signals by using the first type of transmission resources; or
information used to indicate, from one or more candidate power values, power used for transmitting different signals among the plurality of signals by using the second type of transmission resources.

63. The communications device according to claim 55 or 56, wherein the transmission resource is one of a plurality of transmission resources, the plurality of transmission resources correspond to one or more layers, and the first information is used to indicate power used for transmitting the plurality of signals in a transmission resource corresponding to a k^{th} layer among the one or more layers, wherein k is a positive integer greater than or equal to 1.

64. The communications device according to claim 63, wherein on all transmission resources corresponding to the k^{th} layer, same power is used for transmitting different signals among the plurality of signals.

65. The communications device according to claim 64, wherein the first information comprises an identifier of the k^{th} layer, and/or information used to indicate, from one or more candidate power values, power used for transmitting different signals among the plurality of signals.

66. The communications device according to claim 65, wherein partially or entirely different power is used for transmitting the plurality of signals in the transmission resource corresponding to the k^{th} layer.

67. The communications device according to claim 66, wherein the transmission resource corresponding to the k^{th} layer comprises a first type of transmission resources and a second type of transmission resources, same power is used for transmitting the plurality of signals on each transmission resource among the first type of transmission resources, same power is used for transmitting the plurality of signals on each transmission resource among the second type of transmission resources, and the power corresponding to the first type of transmission resources is different from the power corresponding to the second type of transmission resources.

68. The communications device according to claim 67, wherein the first information is used to indicate one or more of following:
the first information comprising an identifier of the k^{th} layer;
location information of the first type of transmission resources among the transmission resource corresponding to the k^{th} layer;
location information of the second type of transmission resources among the transmission resource corresponding to the k^{th} layer;
information used to indicate, from one or more candidate power values, power used for transmitting different signals among the plurality of signals by using the first type of transmission resources; or
information used to indicate, from one or more candidate power values, power used for transmitting different signals among the plurality of signals by using the second type of transmission resources.

69. The communications device according to claim 67, wherein location information of the first type of transmission resources in a (k+n)^{th} layer among the one or more layers is determined based on location information of the first type of transmission resources in the k^{th} layer, wherein n is a positive integer greater than or equal to 1.

70. The communications device according to any one of claims 55 to 69, wherein the first information is associated with a total quantity of layers scheduled by a network device; or
the first information is unrelated to a total quantity of layers scheduled by the network device.

71. The communications device according to any one of claims 55 to 70, wherein the communications device further comprises:
a transmitting unit, configured to transmit second information to the first device, wherein the second information is used to indicate whether the second device has received the first information.

72. The communications device according to any one of claims 55 to 71, wherein the plurality of non-orthogonally superimposed signals comprise a data signal and/or a reference signal.

73. A communications device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 18.

74. An apparatus, comprising a processor configured to invoke a program from a memory, to cause the apparatus to execute the method according to any one of claims 1 to 18.

75. A chip, comprising a processor, configured to invoke a program from a memory to cause a device on which the chip is installed to execute the method according to any one of claims 1 to 18.

76. A computer-readable storage medium, wherein the computer-readable storage medium stores a program, and the program causes a computer to execute the method according to any one of claims 1 to 18.

77. A computer program product, comprising a program that causes a computer to execute the method according to any one of claims 1 to 18.

78. A computer program, wherein the computer program causes a computer to execute the method according to any one of claims 1 to 18.
